# EUROPEAN PATENT APPLICATION

(11) **EP 4 693 233 A1**
(43) Date of publication of application: **11.02.2026**
(21) Application number: 24778103.2
(22) Date of filing: 28.03.2024
(51) Int. Cl.: G07C 9/00

(54) **UNLOCKING AND LOCKING METHOD AND DEVICE**

(30) Priority: 31.03.2023 CN 202310379631
(71) Applicant: Shenzhen Yinwang Intelligent Technologies Co., Ltd., Shenzhen, Guangdong 518110 (CN)
(72) Inventor: HUANG, Jiawei, Shenzhen, Guangdong 518129 (CN); QIAO, Bing, Shenzhen, Guangdong 518129 (CN); LI, Kaihu, Shenzhen, Guangdong 518129 (CN)
(74) Representative: Pfenning, Meinig & Partner mbB
(86) International application number: PCT/CN2024/084261
(87) International publication number: WO 2024/199317

(57) **Abstract**

An unlocking/locking method and unlocking/locking apparatuses (1000, 1100, 1200) are disclosed. The unlocking/locking method includes: obtaining a first mapping relationship when a vehicle (320) is in a first scenario, where the first mapping relationship includes a mapping relationship between a location of a terminal device (310) and signal strength in the first scenario (S510); receiving a first signal sent by the first terminal device (310) of a user (S520); and determining, based on signal strength of the first signal and the first mapping relationship, whether to perform an unlocking operation or a locking operation (S530). This uses a mapping relationship related to a parking scenario to minimize the occurrence of repeated unlocking and locking, thereby improving accuracy of imperceptible unlocking/locking and enhancing user experience.

## Description

This application claims priority to Chinese Patent Application No. 202310379631.8, filed with the China National Intellectual Property Administration on March 31, 2023 and entitled "UNLOCKING/LOCKING METHOD AND APPARATUS", which is incorporated herein by reference in its entirety.

### TECHNICAL FIELD

Embodiments of this application relate to the field of communication technologies, and more specifically, to an unlocking/locking method and apparatus.

### BACKGROUND

A Bluetooth low energy passive entry and passive start system (Bluetooth low energy passive entry and passive start system, BLE PEPS) replaces,, a dedicated smart key in a conventional high-frequency and low-frequency passive entry and passive start system with a smart terminal device (for example, a smartphone or a wearable device of a user), and uses a Bluetooth low energy (Bluetooth low energy, BLE) technology to determine a status of the device outside or inside a vehicle, thereby enabling efficient and convenient vehicle entry and start operations.

A current BLE PEPS depends on a high-precision positioning technology. However, currently, a positioning result of the smart terminal device is inaccurate, which compromises accuracy of Bluetooth key unlocking/locking, affecting user experience.

Therefore, how to improve accuracy of imperceptible unlocking/locking becomes an urgent problem to be resolved.

### SUMMARY

Embodiments of this application provide an unlocking/locking method and apparatus, to improve accuracy of imperceptible unlocking/locking, thereby enhancing user experience.

According to a first aspect, an unlocking/locking method is provided. The method includes: obtaining a first mapping relationship when a vehicle is in a first scenario, where the first mapping relationship includes a mapping relationship between a location of a terminal device and signal strength in the first scenario; receiving a first signal sent by a first terminal device of a user; and determining, based on signal strength of the first signal and the first mapping relationship, whether to perform an unlocking operation or a locking operation.

In the foregoing technical solution, a mapping relationship related to a parking scenario of the vehicle is obtained, so that precision matching positioning between the signal strength and the first terminal device can be implemented, and occurrence of repeated unlocking and locking caused by inaccurate positioning can be minimized, thereby improving accuracy of imperceptible unlocking/locking and enhancing user experience.

For example, in a mapping relationship in which the parking scenario is not used as an association factor, same signal strength may correspond to different positioning results, and the vehicle is accordingly likely to be repeatedly unlocked and locked. According to the foregoing solution, through the mapping relationship related to the parking scenario, the mapping relationship is more refined. This can implement precision matching positioning between the signal strength and the first terminal device, thereby improving accuracy of unlocking/locking.

With reference to the first aspect, in some implementations of the first aspect, obtaining the first mapping relationship when the vehicle is in the first scenario includes: collecting first environment data around the vehicle in the first scenario; and determining the first mapping relationship from a plurality of mapping relationships based on the first environment data, where the plurality of mapping relationships include mapping relationships between the location of the terminal device and the signal strength in a plurality of scenarios, and the plurality of scenarios include the first scenario.

In the foregoing technical solution, the vehicle stores the plurality of mapping relationships. This can reduce a delay in a data transmission process.

With reference to the first aspect, in some implementations of the first aspect, obtaining the first mapping relationship when the vehicle is in the first scenario includes: collecting first environment data around the vehicle in the first scenario; sending the first environment data to a cloud server; and receiving the first mapping relationship from the cloud server.

In the foregoing technical solution, a plurality of mapping relationships are stored in a cloud server. This can save storage space of the vehicle.

With reference to the first aspect, in some implementations of the first aspect, determining, based on the signal strength of the first signal and the first mapping relationship, whether to perform the unlocking operation or the locking operation includes: determining a positioning result of the first terminal device from the first mapping relationship based on the signal strength of the first signal; and determining, based on an area corresponding to the positioning result, whether to perform the unlocking operation or the locking operation.

In the foregoing technical solution, the constructed first mapping relationship in the first scenario is related to the area, rather than each sampling location point having corresponding signal strength data. This not only can reduce a data amount of the first mapping relationship, thereby reducing a data amount of the plurality of mapping relationships, but also can blur a correspondence between signal strength data and the location of the terminal device, to reduce a possibility that the vehicle is repeatedly unlocked or locked, thereby enhancing user experience.

With reference to the first aspect, in some implementations of the first aspect, determining, based on the area corresponding to the positioning result, whether to perform the unlocking operation or the locking operation includes: determining, when the positioning result indicates that the first terminal device is in an unlocking area, to perform the unlocking operation; or determining, when the positioning result indicates that the first terminal device is in a locking area, to perform the locking operation; or determining, when the positioning result indicates that the first terminal device is in a buffer area between the unlocking area and the locking area, not to perform the unlocking operation or the locking operation.

In the foregoing technical solution, the buffer area exists between the unlocking area and the locking area. When the first terminal device is in the buffer area, it is determined not to perform the unlocking or locking operation. This can effectively avoid repeated unlocking and locking, thereby enhancing user experience.

With reference to the first aspect, in some implementations of the first aspect, determining, based on the area corresponding to the positioning result, whether to perform the unlocking operation or the locking operation includes: determining a target unlocking/locking scenario; expanding an operation range of the locking operation or the unlocking operation based on the target unlocking/locking scenario; and determining, based on the area corresponding to the positioning result and an expanded operation range, to perform the locking operation or the unlocking operation.

In some possible implementations, the target unlocking/locking scenario may include any one of a first unlocking scenario, a first locking scenario, or a second locking scenario.

A first determining condition of the first unlocking scenario may be as follows: A vehicle lock status of the vehicle is locking, and a power supply of the vehicle is in a turn-off state, namely, a power-off state. A second determining condition of the first locking scenario may be as follows: The vehicle lock status of the vehicle is unlocking, no person is in the vehicle, and the power supply of the vehicle is in the turn-off state. A third determining condition of the second locking scenario may be as follows: The vehicle lock status of the vehicle is switched from the locking state to the unlocking state, no person is in the vehicle, and the power supply of the vehicle is in the turn-off state.

In the foregoing technical solution, for a different target unlocking/locking scenario, the ranges of the locking operation and the unlocking operation are dynamically adjusted. This not only can improve flexibility of imperceptible unlocking/locking, but also can make ranges of unlocking/locking operations in different scenarios more targeted.

With reference to the first aspect, in some implementations of the first aspect, a buffer area is included between an unlocking area and a locking area, and determining, based on the area corresponding to the positioning result and the expanded operation range, to perform the locking operation or the unlocking operation includes: when the positioning result is in a first range, determining to perform the locking operation, where the first range includes a range between the buffer area and the locking area; or when the positioning result is in a second range, determining to perform the locking operation, where the second range includes a range between the locking area and a link area, and the locking area is located between the buffer area and the link area; or when the positioning result is in a third range, determining to perform the unlocking operation, where the third range includes a range between the unlocking area and the buffer area.

In some possible implementations, when the second determining condition is met, it is determined that the target unlocking/locking scenario is the first unlocking scenario, and an operation range of imperceptible locking is expanded from the locking area to the first range.

In some possible implementations, when the third determining condition is met, it is determined that the target unlocking/locking scenario is the second unlocking scenario, and the operation range of imperceptible locking is expanded from the locking area to the second range.

In some possible implementations, when the first determining condition is met, it is determined that the target unlocking/locking scenario is the first unlocking scenario, and an operation range of imperceptible unlocking is expanded from the unlocking area to the third range.

In the foregoing technical solution, the buffer area and the link area are used as dynamic adjustment areas for adjusting the range of the unlocking/locking operation. This can improve flexibility of imperceptible unlocking/locking.

For example, for a conventional unlocking scenario, namely, the first unlocking scenario, an unlocking range is expanded from the unlocking area to the unlocking area and the buffer area. This can improve flexibility of imperceptible unlocking. For a conventional locking scenario, namely, the first locking scenario, a locking range is expanded from the locking area to the locking area and the buffer area. This can improve flexibility of imperceptible locking.

For another example, for the second locking scenario, the user does not enter the vehicle after imperceptible unlocking. In this case, imperceptible locking needs to further performed. In this case, the locking range is expanded from the locking area to the locking area and the link area. This not only better meets a scenario requirement of the second locking scenario, but also improves flexibility of imperceptible locking.

With reference to the first aspect, in some implementations of the first aspect, determining, based on the area corresponding to the positioning result and the expanded operation range, to perform the locking operation or the unlocking operation includes: obtaining motion data of the user within preset duration; and determining, based on the area corresponding to the positioning result, the expanded operation range, and the motion data, to perform the locking operation or the unlocking operation.

In a possible implementation, when the positioning result is determined for the first time, the motion data of the user within the preset duration is obtained, to determine a target behavior pattern of the user. It is determined, based on the area corresponding to the positioning result, the expanded operation range, and the motion data, to perform the locking operation or the unlocking operation.

The target behavior pattern may include a moving-away behavior of the user, an approach behavior of the user, and a static behavior of the user.

For example, the motion data may include at least one of a motion direction of the user, a motion step count, or the target behavior pattern of the user.

In a possible implementation, when the positioning result is determined for the first time, a first request is sent to the first terminal device, where the first request is used to request the motion data of the user within the preset duration.

In the foregoing technical solution, the motion data of the user is used as a consideration of the unlocking/locking operation, so that fault tolerance avoidance of the positioning result can be further implemented, and occurrence of repeated unlocking and locking can be minimized, thereby improving accuracy of imperceptible unlocking/locking and enhancing user experience.

With reference to the first aspect, in some implementations of the first aspect, determining, when the positioning result indicates that the first terminal device is in the locking area, to perform the locking operation includes: when the positioning result indicates that the first terminal device is in the locking area, and first duration is greater than or equal to a first threshold, determining to perform the locking operation, where the first duration is duration from time when the user gets off the vehicle to time when the positioning result is obtained.

With reference to the first aspect, in some implementations of the first aspect, after the locking operation is performed, determining, when the positioning result indicates that the first terminal device is in the unlocking area, to perform the unlocking operation includes: when the positioning result indicates that the first terminal device is in the unlocking area, and second duration is greater than or equal to a second threshold, determining to perform the unlocking operation, where the second duration is duration from time when the vehicle performs the locking operation to the time when the positioning result is obtained.

In the foregoing technical solution, a scenario-related mapping relationship is applied to the unlocking/locking operation. With reference to a constraint of a time factor, fault tolerance avoidance of the positioning result can be further implemented, and occurrence of repeated unlocking and locking can be minimized, thereby improving accuracy of imperceptible unlocking/locking and enhancing user experience.

With reference to the first aspect, in some implementations of the first aspect, after the unlocking operation is performed, determining, when the positioning result indicates that the first terminal device is in the unlocking area, to perform the unlocking operation includes: when no door opening operation of the user is detected, determining to perform a defensive locking operation; and when the positioning result indicates that the first terminal device is in the unlocking area, and third duration is greater than or equal to a third threshold, determining to perform the unlocking operation, where the third duration is duration from time when the vehicle performs the defensive locking operation to the time when the positioning result is obtained.

In the foregoing technical solution, a scenario of the defensive locking operation may be a scenario in which the vehicle detects no door opening operation of the user after imperceptible unlocking is performed. In this case, with reference to the time factor, imperceptible unlocking can be implemented. This expands an application scenario of imperceptible unlocking, thereby enhancing user experience.

With reference to the first aspect, in some implementations of the first aspect, the method further includes: obtaining a second mapping relationship when the vehicle is in a second scenario, where the second mapping relationship includes a mapping relationship between the location of the terminal device and the signal strength in the second scenario; receiving a second signal sent by the first terminal device of the user; and determining, based on signal strength of the second signal and the second mapping relationship, whether to perform the unlocking operation or the locking operation.

In the foregoing technical solution, after the parking scenario of the vehicle changes, a mapping relationship based on which it is determined to perform unlocking/locking also changes accordingly. This can improve accuracy of imperceptible unlocking/locking in different scenarios, thereby enhancing user experience.

For example, in a positioning manner in which a difference between different parking scenarios is not considered, repeated unlocking and locking caused when the same signal strength corresponds to different positioning results are more likely to occur. In the foregoing solution, a mapping relationship in different parking scenarios is more targeted, to avoid repeated unlocking and locking as much as possible. This improves accuracy of imperceptible unlocking/locking, thereby enhancing user experience.

According to a second aspect, an unlocking/locking method is provided. The method includes: receiving first environment data, where the first environment data includes environment data around a vehicle in a first scenario; determining a first mapping relationship from a plurality of mapping relationships based on the first environment data, where the plurality of mapping relationships include mapping relationships between a location of a terminal device and signal strength in a plurality of scenarios, the first mapping relationship includes a mapping relationship between the location of the terminal device and the signal strength in the first scenario, and the plurality of scenarios include the first scenario; and sending the first mapping relationship.

In the foregoing technical solution, the plurality of mapping relationships are stored in a cloud server. This can save storage space of the vehicle.

According to a third aspect, an unlocking/locking method is provided. The method includes: receiving a first request, and sending motion data of a user within preset duration to a vehicle based on the first request, where the motion data is used to determine to perform a locking operation or an unlocking operation.

For example, the motion data may include at least one of a motion direction of the user, a motion step count, or a target behavior pattern of the user. The target behavior pattern may include a moving-away behavior of the user, an approach behavior of the user, and a static behavior of the user.

In the foregoing technical solution, the motion data of the user is used as a consideration of the unlocking/locking operation, so that fault tolerance avoidance of a positioning result can be further implemented, and occurrence of repeated unlocking and locking can be minimized, thereby improving accuracy of imperceptible unlocking/locking and enhancing user experience.

According to a fourth aspect, an unlocking/locking apparatus is provided. The apparatus includes an obtaining unit, a transceiver unit, and a determining unit. The obtaining unit is configured to obtain a first mapping relationship when a vehicle is in a first scenario, where the first mapping relationship includes a mapping relationship between a location of a terminal device and signal strength in the first scenario. The transceiver unit is configured to receive a first signal sent by a first terminal device of a user. The determining unit is configured to determine, based on signal strength of the first signal and the first mapping relationship, whether to perform an unlocking operation or a locking operation.

It should be understood that technical effect generated according to the solution in the fourth aspect is similar to that of the first aspect. For a part that is not described in detail, refer to the first aspect. Details are not described herein again.

With reference to the fourth aspect, in some implementations of the fourth aspect, the apparatus further includes a collection unit. The collection unit is configured to collect first environment data around the vehicle in the first scenario. The obtaining unit is specifically configured to determine, from a plurality of mapping relationships based on the first environment data, the first mapping relationship that matches the first scenario, where the plurality of mapping relationships include mapping relationships between the location of the terminal device and the signal strength in a plurality of scenarios, and the plurality of scenarios include the first scenario.

With reference to the fourth aspect, in some implementations of the fourth aspect, the apparatus further includes a collection unit. The collection unit is configured to collect first environment data around the vehicle in the first scenario. The transceiver unit is configured to: send the first environment data to a cloud server; and receive the first mapping relationship from the cloud server.

With reference to the fourth aspect, in some implementations of the fourth aspect, the determining unit is specifically configured to: determine a positioning result of the first terminal device from the first mapping relationship based on the signal strength of the first signal; and determine, based on an area corresponding to the positioning result, whether to perform the unlocking operation or the locking operation.

With reference to the fourth aspect, in some implementations of the fourth aspect, the determining unit is specifically configured to: determine, when the positioning result indicates that the first terminal device is in an unlocking area, to perform the unlocking operation; or determine, when the positioning result indicates that the first terminal device is in a locking area, to perform the locking operation; or determine, when the positioning result indicates that the first terminal device is in a buffer area between the unlocking area and the locking area, not to perform the unlocking operation or the locking operation.

With reference to the fourth aspect, in some implementations of the fourth aspect, the determining unit is specifically configured to: determine a target unlocking/locking scenario; expand an operation range of the unlocking/locking operation or the unlocking operation based on the target unlocking/locking scenario; and determine, based on the area corresponding to the positioning result and an expanded operation range, to perform the locking operation or the unlocking operation.

With reference to the fourth aspect, in some implementations of the fourth aspect, a buffer area is included between an unlocking area and a locking area. The determining unit is specifically configured to: when the positioning result is in a first range, determine to perform the locking operation, where the first range includes a range between the buffer area and the locking area; or when the positioning result is in a second range, determine to perform the locking operation, where the second range includes a range between the locking area and a link area, and the locking area is located between the buffer area and the link area; or when the positioning result is in a third range, determine to perform the unlocking operation, where the third range includes a range between the unlocking area and the buffer area.

With reference to the fourth aspect, in some implementations of the fourth aspect, the determining unit is specifically configured to: obtain motion data of the user within preset duration; and determine, based on the area corresponding to the positioning result, the expanded operation range, and the motion data, to perform the locking operation or the unlocking operation.

With reference to the fourth aspect, in some implementations of the fourth aspect, the determining unit is specifically configured to: when the positioning result indicates that the first terminal device is in the locking area, and first duration is greater than or equal to a first threshold, determine to perform the locking operation, where the first duration is duration from time when the user gets off the vehicle to time when the positioning result is obtained.

With reference to the fourth aspect, in some implementations of the fourth aspect, after performing the locking operation, the determining unit is specifically configured to: when the positioning result indicates that the first terminal device is in the unlocking area, and second duration is greater than or equal to a second threshold, determine to perform the unlocking operation, where the second duration is duration from time when the vehicle performs the locking operation to the time when the positioning result is obtained.

With reference to the fourth aspect, in some implementations of the fourth aspect, after performing the unlocking operation, the determining unit is specifically configured to: when no door opening operation of the user is detected, determine to perform defensive locking operation; and when the positioning result indicates that the first terminal device is in the unlocking area, and third duration is greater than or equal to a third threshold, determine to perform the unlocking operation, where the third duration is duration from time when the vehicle performs the defensive locking operation to the time when the positioning result is obtained.

With reference to the fourth aspect, in some implementations of the fourth aspect, the obtaining unit is further configured to obtain a second mapping relationship when the vehicle is in a second scenario, where the second mapping relationship includes a mapping relationship between the location of the terminal device and the signal strength in the second scenario. The transceiver unit is further configured to receive a second signal sent by the first terminal device of the user. The determining unit is further configured to determine, based on signal strength of the second signal and the second mapping relationship, whether to perform the unlocking operation or the locking operation.

According to a fifth aspect, a cloud server is provided. The cloud server includes a transceiver unit and a processing unit. The transceiver unit is configured to receive first environment data, where the first environment data includes environment data around a vehicle in a first scenario. The processing unit is configured to determine a first mapping relationship from a plurality of mapping relationships based on the first environment data, where the plurality of mapping relationships include mapping relationships between a location of a terminal device and signal strength in a plurality of scenarios, the first mapping relationship includes a mapping relationship between the location of the terminal device and the signal strength in the first scenario, and the plurality of scenarios include the first scenario. The transceiver unit is configured to send the first mapping relationship.

It should be understood that technical effect generated according to the solution in the fifth aspect is similar to that in the second aspect. For a part that is not described in detail, refer to the second aspect. Details are not described herein again.

According to a sixth aspect, a first terminal device is provided. The first terminal device includes a transceiver unit and a processing unit. The transceiver unit is configured to receive a first request. The processing unit is configured to send motion data of a user within preset duration to a vehicle based on the first request, where the motion data is used to determine to perform a locking operation or an unlocking operation.

For example, the motion data may include at least one of a motion direction of the user, a motion step count, or a target behavior pattern of the user. The target behavior pattern may include a moving-away behavior of the user, an approach behavior of the user, and a static behavior of the user.

It should be understood that technical effect generated according to the solution in the sixth aspect is similar to that in the third aspect. For a part that is not described in detail, refer to the third aspect. Details are not described herein again.

According to a seventh aspect, an unlocking/locking apparatus is provided. The apparatus includes a processor and a memory. The memory is configured to store a computer program. The processor executes the computer program stored in the memory, to enable the apparatus to perform any possible method according to the first aspect.

According to an eighth aspect, an unlocking/locking system is provided. The system includes any possible apparatus according to the fourth aspect, any possible cloud server according to the fifth aspect, and any possible first terminal device according to the sixth aspect. Alternatively, the system includes any possible apparatus according to the fourth aspect and any possible first terminal device according to the sixth aspect.

According to a ninth aspect, a vehicle is provided. The vehicle includes any possible apparatus according to the fourth aspect.

It should be understood that the vehicle in this application may include a road transport means, a water transport means, an air transport means, an industrial device, an agricultural device, an entertainment device, or the like. For example, the vehicle may be a vehicle. The vehicle is a vehicle in a broad sense, and may be a transport means (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application. For another example, the vehicle may be a transport means like an airplane or a ship.

According to a tenth aspect, a computer program product is provided. The computer program product includes computer program code. When the computer program code is run on a computer, the computer is enabled to perform any possible method according to the first aspect, the second aspect, or the third aspect.

It should be noted that the computer program code may be completely or partially stored in a first storage medium. The first storage medium may be encapsulated with a processor, or may be encapsulated separately from the processor. This is not specifically limited in this embodiment of this application.

According to an eleventh aspect, a computer-readable medium is provided. The computer-readable medium stores program code. When the computer program code is run on a computer, the computer is enabled to perform any possible method according to the first aspect, the second aspect, or the third aspect.

According to a twelfth aspect, an embodiment of this application provides a chip system. The chip system includes a processor, configured to invoke a computer program or computer instructions stored in a memory, to enable the processor to perform any possible method according to the first aspect, the second aspect, or the third aspect.

With reference to the twelfth aspect, in a possible implementation, the processor is coupled to the memory through an interface.

With reference to the twelfth aspect, in a possible implementation, the chip system further includes a memory. The memory stores a computer program or computer instructions.

### BRIEF DESCRIPTION OF DRAWINGS

FIG. 1 is a functional block diagram of a vehicle 100 according to an embodiment of this application;
FIG. 2 is a diagram of distribution of sensors used in a vehicle 100 according to an embodiment of this application;
FIG. 3 is a block diagram of an unlocking/locking system according to an embodiment of this application;
FIG. 4 is a diagram of unlocking/locking area division according to an embodiment of this application;
FIG. 5 is a schematic flowchart of an unlocking/locking method according to an embodiment of this application;
FIG. 6A and FIG. 6B are a schematic flowchart of another unlocking/locking method according to an embodiment of this application;
FIG. 7A and FIG. 7B are a schematic flowchart of still another unlocking/locking method according to an embodiment of this application;
FIG. 8A and FIG. 8B are a schematic flowchart of yet still another unlocking/locking method according to an embodiment of this application;
FIG. 9A and FIG. 9B show an offline process of establishing a mapping relationship according to an embodiment of this application;
FIG. 10 is a block diagram of an unlocking/locking apparatus 1000 according to an embodiment of this application;
FIG. 11 is a block diagram of an unlocking/locking apparatus 1100 according to an embodiment of this application; and
FIG. 12 is a block diagram of a structure of an unlocking/locking apparatus 1200 according to an embodiment of this application.

### DESCRIPTION OF EMBODIMENTS

The following describes technical solutions in embodiments of this application with reference to accompanying drawings.

For ease of understanding of embodiments of this application, the following descriptions are provided.

First, in this application, unless otherwise specified or there is a logic conflict, terms and/or descriptions between different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c, where a, b, and c each may be singular or plural.

Third, in this application, "first", "second", and various numbers indicate differentiation for ease of description, but are not intended to limit the scope of embodiments of this application, for example, are intended to differentiate between different mapping relationships but not to describe a specific order or sequence. It should be understood that objects described in such a way are interchangeable in an appropriate circumstance, so that a solution other than embodiments of this application can be described.

Fourth, in this application, descriptions such as "when...", "in a case that...", and "if" all mean that a device performs corresponding processing in an objective case, but are not intended to limit time, do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "store" may be storing in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited in this application.

A passive entry and passive start system (passive entry and passive start system, PEPS), with a core of high-frequency and low-frequency bidirectional communication, aims to simplify complex entry and start operations of a user during use of a vehicle. In recent years, although development of a conventional high-frequency and low-frequency PEPS is mature, the user still needs to be provided with and carry a dedicated smart key to implement simple entry and start operations. As a concept of an internet of things is put forward, an internet of vehicles technology featured with information exchange between persons, vehicles, and roads is gradually valued by automobile manufacturers in and outside China, and becomes a focus of research and development investment. Against this background, a Bluetooth low energy PEPS is expected to become a new technical solution to replace the conventional high-frequency and low-frequency PEPS.

The BLE PEPS is a system that uses an implementation idea of the high-frequency and low-frequency PEPS as a reference, uses a low-cost, short-range, and interactive BLE technology as a main technical solution, and finally implements passive entry and passive start based on a smart terminal device (for example, a smartphone or a wearable device). The BLE PEPS replaces a dedicated smart key in the high-frequency and low-frequency PEPS with the smart terminal device, and uses the BLE technology to determine a status of the device outside or inside the vehicle, thereby enabling efficient and convenient vehicle entry and start operations.

The BLE PEPS is implemented depending on high-precision positioning of the smart terminal device. A current high-precision positioning solution is mainly a BLE-based received signal strength indicator (received signal strength indicator, RSSI) positioning solution. An operating frequency band of the BLE technology in the positioning solution is an industrial scientific medical (industrial scientific medical, ISM) frequency band from 2.4 GHz to 2.4835 GHz. On one hand, a signal anti-interference capability of the operating frequency band of the BLE technology is poor. Consequently, Bluetooth low energy stability is poor. On the other hand, precision of an RSSI positioning algorithm is low. Consequently, in the BLE-based RSSI positioning solution, the vehicle is repeatedly unlocked or locked, which compromises accuracy of unlocking/locking using a Bluetooth key.

Currently, there is a BLE-based RSSI positioning solution in which a ranging-based RSSI positioning algorithm is used. In the positioning solution, positioning is implemented based on a logarithmic path loss model. The logarithmic path loss model is an ideal empirical model for associating RSSI information with a propagation distance. The positioning solution generally includes a ranging phase, a location estimation phase, and a location information correction phase. An RSSI is converted into a propagation distance based on the logarithmic path loss model, and then location coordinate information of the smart terminal device is further obtained through calculation based on the propagation distance. This model is an ideal empirical model that ignores impact of shadow fading and multipath effect on the RSSI.

In a strong-interference scenario, a correspondence between the RSSI and the propagation distance differs greatly from descriptions of the logarithmic path loss model. Therefore, the propagation distance obtained through calculation based on the logarithmic path loss model differs greatly from an actual propagation distance. As a result, a positioning result deviates greatly from an actual location, and accuracy of unlocking/locking using the Bluetooth key is reduced. In addition, even in a weak-interference scenario, because the signal anti-interference capability of the BLE technology is poor, an RSSI value obtained by a BLE antenna on the vehicle through receiving and parsing fluctuates slightly. Consequently, a positioning result of the smart terminal device jumps when the smart terminal device is near an unlocking and locking boundary, and the vehicle is accordingly repeatedly unlocked or locked. Therefore, the positioning solution compromises accuracy of unlocking/locking using the Bluetooth key, affecting user experience.

Another BLE-based RSSI positioning solution is a positioning solution based on a mapping relationship between RSSI information and a to-be-measured spatial physical location. The positioning solution includes an offline location signal strength database establishment phase and an online positioning phase. In the offline signal strength data establishment phase, locations of different sampling points in space outside the vehicle are associated with RSSI data of the locations, and the locations and the RSSI data are uploaded to a cloud server. The cloud server establishes, based on the data, a location signal strength database associated with the RSSI information and the to-be-measured spatial physical location. In the online positioning phase, the vehicle downloads the location signal strength database from the cloud server. The vehicle parses, through a BLE antenna, a BLE signal sent by the smart terminal device, to obtain the RSSI data, and then obtains corresponding location information through matching using the location signal strength database, to implement positioning of the smart terminal device.

Although a difference between RSSI data under strong interference and RSSI data under weak interference is comprehensively considered in the offline location signal strength database establishment phase, in the location signal strength database, same RSSI vector data may correspond to two different pieces of location information. In this case, a positioning result of the smart terminal device jumps. If the two pieces of location information respectively correspond to two states: a vehicle locked state and a vehicle unlocked state, the vehicle is repeatedly unlocked or locked. Alternatively, in the location signal strength database, two locations may be close to each other, but RSSI data of the two locations may differ greatly. When the smart terminal device is near the two locations that are close to each other, a positioning result may also repeatedly jump. Consequently, the vehicle is repeatedly unlocked or locked.

Therefore, the foregoing solutions both compromise accuracy of unlocking/locking using the Bluetooth key, affecting user experience.

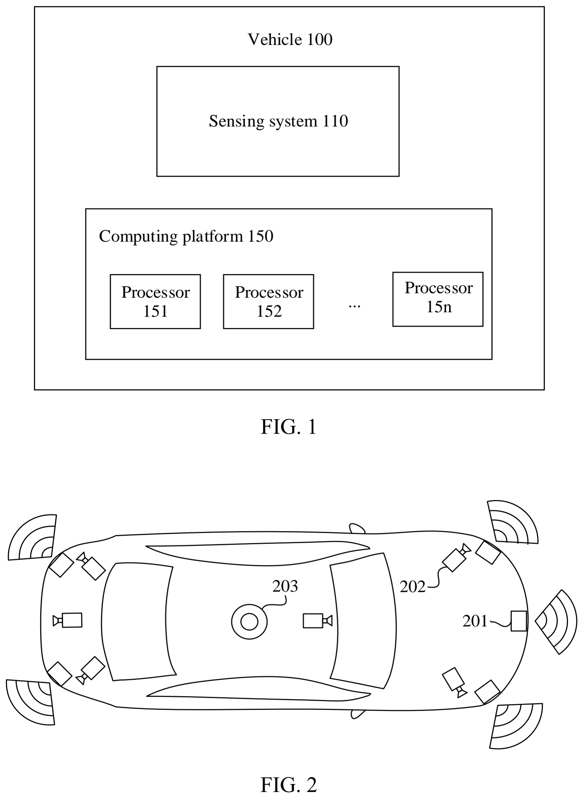

For the foregoing problem, embodiments of this application provide an unlocking/locking method and apparatus. The following provides detailed descriptions with reference to FIG. 1 to FIG. 10.

FIG. 1 is a functional block diagram of a vehicle 100 according to an embodiment of this application.

The vehicle 100 may include a sensing system 110 and a computing platform 150. The sensing system 110 may include several types of sensors that sense information about an environment surrounding the vehicle 100. For example, the sensing system 110 may include a positioning system. The positioning system may be a global positioning system (global positioning system, GPS), or may be one or more of a BeiDou system or another positioning system, an inertial measurement unit (inertial measurement unit, IMU), a lidar, millimeter-wave radar, an ultrasonic radar, and a camera apparatus.

Some or all functions of the vehicle 100 may be controlled by the computing platform 150. The computing platform 150 may include processors 151 to 15n (n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a function by using a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU). In addition, the computing platform 150 may further include a memory. The memory is configured to store instructions. Some or all of the processors 151 to 15n may invoke the instructions in the memory, and execute the instructions, to implement a corresponding function.

The vehicle 100 may include an advanced driver assistance system (advanced driver assistance system, ADAS). The ADAS obtains information around the vehicle using a plurality of types of sensors (including but not limited to the lidar, the millimeter-wave radar, the camera apparatus, an ultrasonic sensor, the global positioning system, and the inertia measurement unit) in the vehicle, and analyzes and processes the obtained information, to implement functions such as obstacle sensing, target recognition, vehicle positioning, route planning, and driver monitoring/reminder. This improves traveling safety, automation, and comfort of the vehicle.

In this embodiment of this application, the vehicle may include a road transport means, a water transport means, an air transport means, an industrial device, an agricultural device, an entertainment device, or the like. For example, the vehicle may be a vehicle. The vehicle is a vehicle in a broad sense, and may be a transport means (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application. For another example, the vehicle may be a transport means like an airplane or a ship.

FIG. 2 is a diagram of distribution of sensors used in the vehicle 100 according to an embodiment of this application. It should be understood that FIG. 2 is merely a diagram of an example of a distribution manner of the sensors, and there may be another distribution manner. This is not limited in embodiments of this application. As shown in FIG. 2, the sensors distributed in the vehicle 100 include a millimeter-wave radar 201, a camera apparatus 202, and a lidar 203, and may further include another sensor that is not shown in FIG. 2. This is not limited in embodiments of this application. For example, a farthest sensing distance of the lidar is approximately 150 meters, a farthest sensing distance of the camera apparatus is approximately 200 meters, a farthest sensing distance of a long-range millimeter-wave radar is approximately 250 meters, and a farthest sensing distance of a medium/short-range millimeter-wave radar is approximately 120 meters.

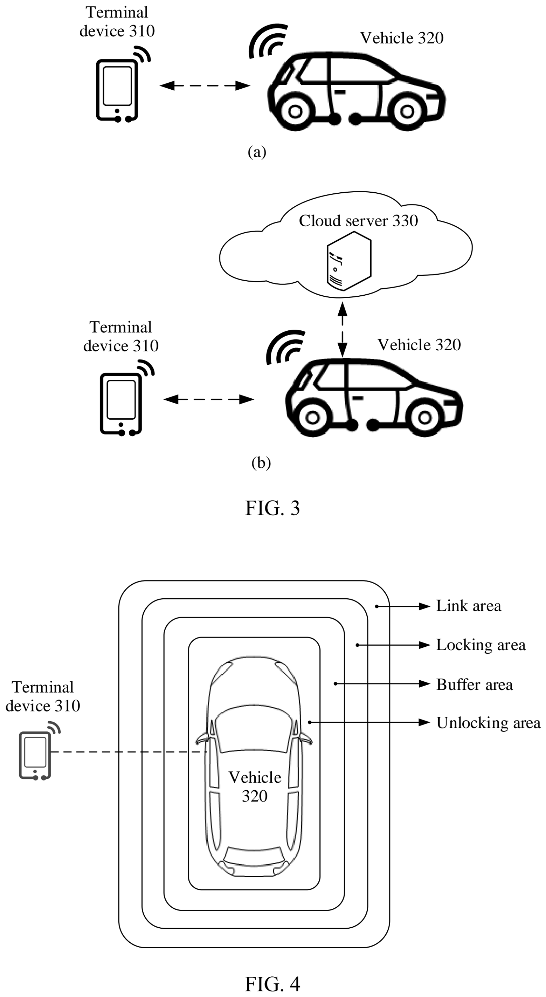

FIG. 3 is a block diagram of an unlocking/locking system according to an embodiment of this application.

As shown in (a) in FIG. 3, an unlocking/locking system includes a terminal device 310 and a vehicle 320. The terminal device 310 and the vehicle 320 are connected in a wireless communication manner, for example, communicate using Bluetooth (Bluetooth), wireless fidelity (wireless fidelity, Wi-Fi), or near field communication (near field communication, NFC). This is not limited in embodiments of this application. The following mainly uses Bluetooth low energy BLE as an example for description.

It should be understood that the terminal device 310 may be a smartphone (smartphone), a tablet (pad), a wearable device, a computer with a wireless transceiver function, a virtual reality (virtual reality, VR) terminal device, an augmented reality (augmented reality, AR) terminal device, or the like. This is not limited in embodiments of this application. In this embodiment of this application, the smartphone is used as an example for description. The vehicle 320 may be the vehicle shown in FIG. 1 or FIG. 2.

As shown in (b) in FIG. 3, another unlocking/locking system may further include a cloud server 330. The terminal device 310 and the vehicle 320 may be connected in a wireless communication manner. An example of a specific form is similar to related descriptions in (a) in FIG. 3. The vehicle 320 and the cloud server 330 are also connected in a wireless communication manner, and may be specifically, for example, a communication manner like long term evolution (long time evolution, LTE), 4th generation (4th generation, 4G) communication, 5th generation (5th generation, 5G) communication, or future evolved communication. This is not limited in embodiments of this application.

FIG. 4 is a diagram of unlocking/locking area division according to an embodiment of this application.

The diagram of unlocking/locking area division shown in FIG. 4 may be applied to embodiments of this application. As shown in FIG. 4, in a direction in which the terminal device 310 moves away from the vehicle 320, an unlocking area, a buffer area, a locking area, and a link area may be separately included. When the terminal device 310 is in the unlocking area, the vehicle 320 may be triggered for unlocking. When the terminal device 310 is in the buffer area, the vehicle 320 may be unlocked, locked, or neither unlocked nor locked. A specific function of the buffer area may dynamically change. A specific change is described in detail with reference to a subsequent implementation. When the terminal device 310 is in the locking area, the vehicle 320 may be triggered for locking. When the terminal device 310 is in the link area, the terminal device 310 and the vehicle 320 are in a connected state. When the terminal device 310 is in an area other than the foregoing areas, the terminal device 310 and the vehicle 320 do not perform an unlocking/locking operation.

For example, a range of the unlocking area may be set to (a, b) meters (m) away from the vehicle, for example, 0 m to 3 m; a range of the buffer area may be set to (b, c) meters away from the vehicle, for example, 3 m to 6 m; a range of the locking area may be set to (c, d) m, for example, 6 m to 10 m; and a range of the link area may be set to (d, f) m, for example, 10 m to 30 m. It should be understood that ranges of different areas may alternatively be set to other specific values, and examples are provided merely for description herein.

It should be understood that, although only the terminal device 310 and the vehicle 320 are shown in the unlocking/locking area division shown in FIG. 4, FIG. 4 does not limit a specific form of an unlocking/locking system, and the system may still be the system shown in (a) in FIG. 3 or (b) in FIG. 3.

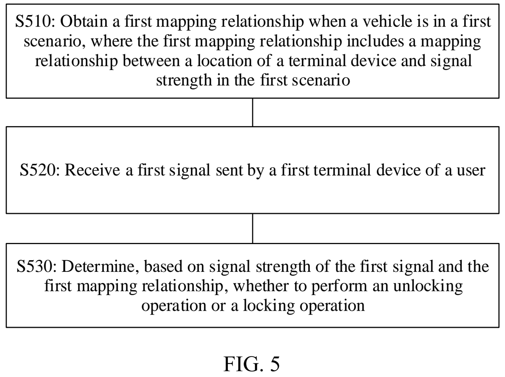

FIG. 5 is a schematic flowchart of an unlocking/locking method according to an embodiment of this application.

It should be understood that the method shown in FIG. 5 may be performed by a vehicle, or a chip, a chip system, or a processor that supports the vehicle in implementing a corresponding method, or a logic module or software that implements all or some functions of the vehicle. Alternatively, the method shown in FIG. 5 may be performed by a cloud server, or a chip, a chip system, or a processor that supports the cloud server in implementing a corresponding method, or a logic module or software that implements all or some functions of the cloud server.

S510: Obtain a first mapping relationship when the vehicle is in a first scenario, where the first mapping relationship includes a mapping relationship between a location of a terminal device and signal strength in the first scenario.

The location of the terminal device may be a point at which the terminal device is, or an area in which the terminal device is.

For example, the first scenario may be an indoor parking scenario (for example, an underground parking lot) or an outdoor parking scenario (for example, an open-air parking lot or a roadside parking space).

Optionally, the first mapping relationship is one of a plurality of mapping relationships. The plurality of mapping relationships include mapping relationships between the location of the terminal device and the signal strength in a plurality of scenarios. The plurality of scenarios include the first scenario.

In a possible implementation, the vehicle collects first environment data of the first scenario, and determines, from the plurality of mapping relationships based on the first environment data, the first mapping relationship that matches the first scenario.

For example, the first environment data is collected via a sensor in the sensing system 110 of the vehicle 100 in FIG. 1. For example, the sensing system 110 may be a sensor like a camera or a radar.

Specifically, the first environment data is identified, to determine that the vehicle is in the first scenario. The first mapping relationship that matches the first scenario is determined from the plurality of mapping relationships based on the first scenario.

For example, the first environment data is identified, to determine a first feature index corresponding to the first scenario, and the first mapping relationship that matches the first scenario is determined from the plurality of mapping relationships based on the first feature index.

It should be understood that the first feature index may be marker data that represents the first scenario. The first feature index may alternatively be obtained by inputting the first environment data into a feature extraction model.

In a possible implementation, the collected first environment data is sent to the cloud server, and the vehicle receives the first mapping relationship determined by the cloud server.

In this case, the plurality of mapping relationships are stored in the cloud server. This can save storage space of the vehicle.

In some implementations, when the vehicle is in the first scenario, the cloud server receives the first environment data from the vehicle, and determines, from the plurality of mapping relationships based on the first environment data, the first mapping relationship that matches the first scenario, to obtain the first mapping relationship. The first mapping relationship includes the mapping relationship between the location of the terminal device and the signal strength in the first scenario.

It should be understood that a process in which the cloud server determines the first mapping relationship is similar to a process in which the vehicle determines the first mapping relationship. Details are not described herein again.

It should be understood that the first mapping relationship and the plurality of mapping relationships are all established offline, the first mapping relationship may also be referred to as a first sub-database, the plurality of mapping relationships may be referred to as a general database, and the general database includes the first sub-database.

The location of the terminal device in S510 may be a location corresponding to the terminal device in an offline mapping relationship establishment phase. Herein, the location of the terminal device may be understood as an area corresponding to the location of the terminal device in a broad sense, or may be understood as a coordinate location of the terminal device in a narrow sense. The coordinate location may be based on a vehicle coordinate system, or may be based on a geodetic coordinate system. This is not limited in embodiments of this application.

In S510, the signal strength may be a received signal strength indicator RSSI that is in a one-to-one correspondence with the location of the terminal device in the offline mapping relationship establishment phase. The received signal strength indicator may also be referred to as a received signal strength indicator in a training phase, and is referred to as a training RSSI for short in the following descriptions. Alternatively, the signal strength may be in another form. This is not limited in embodiments of this application.

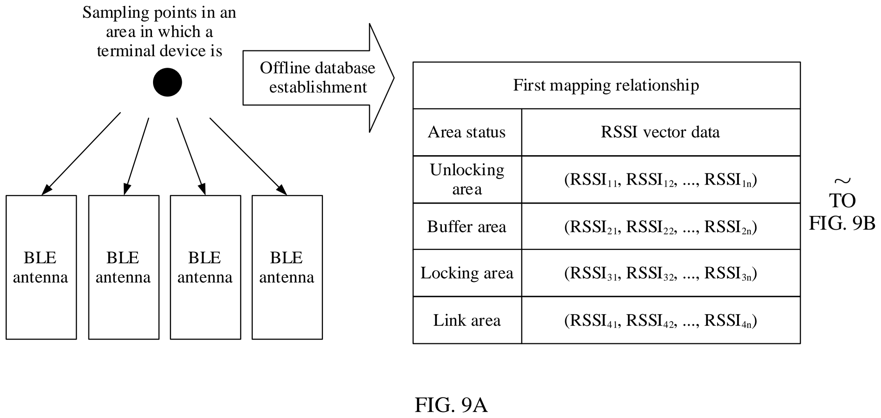

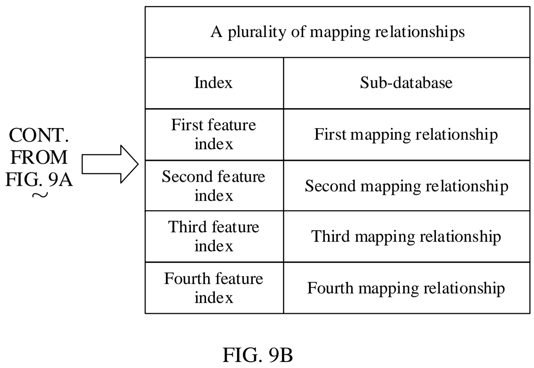

FIG. 9A and FIG. 9B show an offline process of establishing a mapping relationship according to an embodiment of this application.

It should be understood that a location of a terminal device shown in FIG. 9A and FIG. 9B is based on the foregoing broad-sense understanding as an example, namely, an area corresponding to the location of the terminal device. A type of an area in which the terminal device is shown in FIG. 9A and FIG. 9B is shown in FIG. 4. For related detailed descriptions, refer to FIG. 4. Details are not described herein again.

In the first scenario, an offline process of establishing the first mapping relationship is as follows.

Step 1: In the first scenario, obtain, through division, several sampling areas in external space of the vehicle. Each sampling area may be understood as an area shown in FIG. 4, or each sampling area may be a sampling area set formed by sub-areas in the area shown in FIG. 4. This is not limited in embodiments of this application. In FIG. 9A and FIG. 9B, the former is used as an example for description.

Step 2: Properly select several RSSI data sampling points in each sampling area, and keep the terminal device still at each sampling point for a period of time, so that a BLE antenna of the vehicle collects a plurality of groups of RSSI values corresponding to the data sampling points.

Step 3: Perform processing such as standardization, averaging, and Gaussian filtering on the collected RSSI values, to obtain a stable RSSI vector corresponding to the data sampling point. An area status information of the data sampling point relative to the vehicle and the corresponding stable RSSI vector form one piece of first correspondence data indicating that RRSI vector data is related to the area of the terminal device. For example, RSSI vector data corresponding to the unlocking area is (RSSI₁₁, RSSI₁₂, ..., RSSI₁ₙ).

Step 4: Construct the first mapping relationship in the first scenario using a plurality of pieces of correspondence data.

In a possible implementation, the first mapping relationship is formed using a plurality of pieces of first correspondence data and is stored in the vehicle.

In this case, an unlocking/locking system is shown in (a) in FIG. 3.

In a possible implementation, after each piece of first correspondence data is uploaded to the cloud server, and the plurality of pieces of first correspondence data are uploaded to the cloud server, the cloud server completes the offline process of establishing the first mapping relationship in the first scenario.

In this case, an unlocking/locking system is shown in (b) in FIG. 3.

For example, as shown in FIG. 9A and FIG. 9B, the first mapping relationship includes four pieces of first correspondence data that are respectively first correspondence data #1 between the unlocking area and the RSSI vector data, first correspondence data #2 between a buffer area and RSSI vector data, first correspondence data #3 between a locking area and RSSI vector data, and first correspondence data #4 between a link area and RSSI vector data.

In this way, the constructed first mapping relationship in the first scenario is related to the area, rather than each sampling location point having corresponding signal strength data. This not only can reduce a data amount of the first mapping relationship, thereby reducing a data amount of the plurality of mapping relationships, but also can blur a correspondence between signal strength data and the location of the terminal device, to reduce a possibility that the vehicle is repeatedly unlocked or locked, thereby enhancing user experience.

In different parking scenarios, an offline process of establishing the plurality of mapping relationships is as follows.

Step 1: After the first mapping relationship in the first scenario is established, obtain the first environment data of the vehicle in the first scenario.

Specifically, the first environment data is obtained via the sensor in the sensing system 110 of the vehicle 100 in FIG. 1. For example, the sensing system 110 may be the sensor like the camera or the radar.

Step 2: Determine, based on the first environment data and the first mapping relationship, second correspondence data indicating that the first mapping relationship is related to the first scenario.

Specifically, a first feature index of a first parking environment may be obtained based on the first environment data. The first mapping relationship and the first feature index form second correspondence data indicating that the first mapping relationship is related to the first scenario.

For example, the first feature index may be the marker data that may represent the first scenario in the first environment data.

For another example, the first feature index may alternatively be obtained by inputting the first environment data into a feature extraction model.

In a possible implementation, the first environment data is sent to the cloud server. The first feature index of the first mapping relationship is determined by the cloud server. The second correspondence data indicating that the first mapping relationship is related to the first scenario is also determined by the cloud server.

In a possible implementation, the vehicle obtains the first feature index based on the first environment data, and constructs the second correspondence data indicating that the first scenario is correlated with the first mapping relationship.

Step 3: Construct the plurality of mapping relationships based on a plurality of pieces of second correspondence data.

It should be understood that the plurality of pieces of second correspondence data represent a plurality of pieces of second correspondence data in different parking scenarios. As shown in FIG. 9A and FIG. 9B, the second correspondence data may be a correspondence between the first feature index and the first mapping relationship in the first scenario, or may be a correspondence between a second feature index and a second mapping relationship in a second scenario, or the like.

In a possible implementation, the plurality of mapping relationships may be constructed and stored by the vehicle.

In a possible implementation, the plurality of mapping relationships may alternatively be constructed and stored by the cloud server.

S520: Receive a first signal sent by a first terminal device of a user.

It should be understood that the first terminal device is a device of the user in a phase in which the first mapping relationship is used.

In a possible implementation, a plurality of BLE antennas of the vehicle parse the first signal (for example, a BLE signal) sent by the first terminal device into RSSI values, and combine the RSSI values into an RSSI vector. The RSSI vector may be understood as a representation form of signal strength of the first signal. A specific representation form of the signal strength of the first signal is not limited in embodiments of this application.

In some implementations, the vehicle receives the first signal sent by the first terminal device, and the vehicle sends the first signal to the cloud server.

S530: Determine, based on the signal strength of the first signal and the first mapping relationship, whether to perform an unlocking operation or a locking operation.

It should be understood that the following uses a first RSSI as an example to describe the signal strength of the first signal.

In a possible implementation, the first RSSI is transmitted to a computing platform of the vehicle. The computing platform matches the received first RSSI and the first mapping relationship according to a matching algorithm, to find a nearest or adjacent sampling point, and uses area status information corresponding to the sampling point as a positioning result of the vehicle. It is determined, based on the positioning result, whether to perform the unlocking operation or the locking operation.

In some implementations, the cloud server determines, based on the signal strength of the first signal and the first mapping relationship, whether to perform the unlocking operation or the locking operation, and sends a determining result to the vehicle.

In the foregoing technical solution, the mapping relationship related to the parking scenario of the vehicle is obtained, so that precision matching positioning between the signal strength and the first terminal device can be implemented. This improves accuracy of imperceptible unlocking/locking.

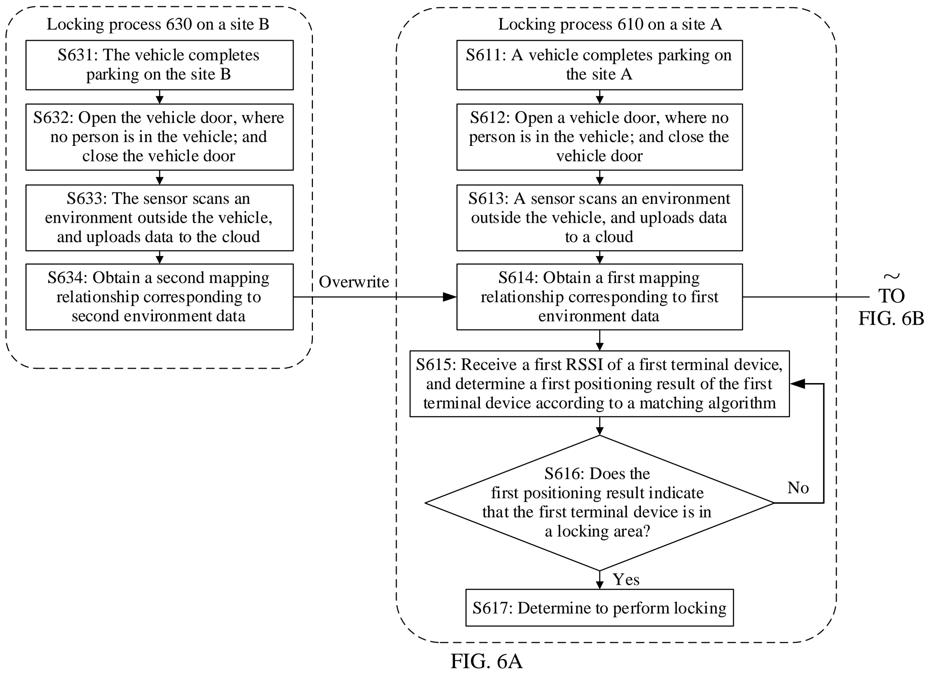

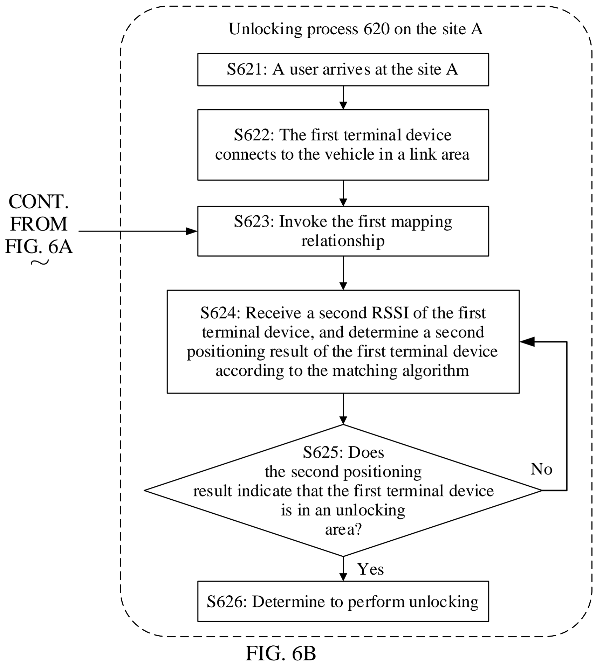

With reference to FIG. 6A and FIG. 6B, the following describes in detail a detailed process of performing imperceptible locking and imperceptible unlocking using the mapping relationship related to the parking scenario shown in FIG. 5.

FIG. 6A and FIG. 6B are a schematic flowchart of another unlocking/locking method according to an embodiment of this application.

As shown in FIG. 6A and FIG. 6B, the unlocking/locking method includes a locking process 610 and an unlocking process 620 of the vehicle on a site A, and a locking process 630 of the vehicle from the site A to a site B.

The locking process 610 of the vehicle on the site A is as follows.

S611: The vehicle completes parking on the site A.

It should be understood that the site A is a specific example of the first scenario. For example, the site A may be an underground parking lot.

S612: The vehicle detects an operation of opening and closing a vehicle door, and a state that no person is in the vehicle, and determines that an unlocking/locking requirement of the vehicle is a locking requirement.

It should be understood that S612 may be considered as a possible implementation in which the vehicle determines the unlocking/locking requirement.

S613: The vehicle performs a scanning operation on an external environment, to obtain the first environment data, and uploads the first environment data to the cloud server.

For example, the vehicle quickly invokes a 360° around-view camera, a millimeter-wave radar, and a lidar outside the vehicle to perform panoramic scanning on the environment outside the vehicle, and uploads the obtained first environment data to the cloud server.

S614: The vehicle receives, from the cloud server, the first mapping relationship corresponding to the first environment data.

In a possible implementation, the cloud server determines the first feature index based on the first environment data. The first feature index may be marker data that represents the site A, or may be feature data obtained using the feature extraction model. Then, the first mapping relationship that is highly adapted to the site A is retrieved from the plurality of mapping relationships based on the first feature index. Finally, all the first correspondence data in the first mapping relationship is delivered to a data storage area of the vehicle for storage.

S615: The vehicle receives the first RSSI from the first terminal device, and determines a first positioning result of the first terminal device according to a matching algorithm.

In a possible implementation, the vehicle parses, through the plurality of BLE antennas, a data packet sent by the first terminal device into RSSI values, and combines the RSSI values into an RSSI vector. Then, the RSSI vector is transmitted to the computing platform of the vehicle. Finally, the computing platform matches the received RSSI vector and the first mapping relationship according to the matching algorithm, finds a nearest or adjacent sampling point, and uses area status information of the sampling point as the first positioning result of the first terminal device.

S616: The vehicle determines whether the first positioning result indicates that the first terminal device is in the locking area.

If the first positioning result indicates that the first terminal device is in the locking area, S617 is performed, to determine to perform locking.

If the first positioning result indicates that the first terminal device is in a non-locking area, S615 is performed again, to obtain a new first positioning result based on new RSSI data sent by the first terminal device.

In a possible implementation, after detecting that the user closes the vehicle door, the vehicle obtains the first positioning result for the first time by performing S613 to S615. If the first positioning result is the unlocking area, it is determined not to perform the locking operation, but to perform S615. When the first terminal device of the user gradually moves away from the vehicle, if the new first positioning result becomes the buffer area, it is determined not to perform the locking operation, but to perform S615. When the user further moves away from the vehicle, and a new first positioning result appears in the locking area for the first time, S617 is performed, to smoothly complete an imperceptible locking service.

It should be understood that the first terminal device is carried with the user.

The unlocking process 620 of the vehicle on the site A is as follows.

S621: The first terminal device of the user determines that the user arrives at the site A.

S622: The first terminal device connects to the vehicle in the link area.

In a possible implementation, as the first terminal device of the user is closer to the vehicle of the user, when arriving at the link area, the first terminal device successfully establishes a BLE Bluetooth connection to the vehicle.

It should be understood that, in this case, the vehicle is in an OFF electric state, and it is not required to trigger scanning on the environment outside the vehicle.

S623: The vehicle invokes the first mapping relationship obtained in S614 in the locking process 610.

S624: The vehicle receives a second RSSI from the first terminal device, and determines a second positioning result of the first terminal device according to the matching algorithm.

A specific manner of determining the second positioning result is similar to a manner of determining the first positioning result in S615. For details, refer to S615. A detailed process is not described herein again.

S625: The vehicle determines whether the second positioning result indicates that the first terminal device is in the unlocking area.

If the second positioning result indicates that the first terminal device is in the unlocking area, S626 is performed, to determine to perform unlocking.

If the second positioning result indicates that the first terminal device is in a non-unlocking area, S625 is performed again, to obtain a new second positioning result based on new second RSSI data sent by the first terminal device.

In a possible implementation, after the first terminal device establishes the BLE Bluetooth connection to the vehicle, the vehicle obtains the second positioning result for the first time. In this case, if the second positioning result indicates the link area, it is determined to perform the unlocking operation, and perform S624. When the first terminal device of the user gradually approaches the vehicle, if the new second positioning result becomes the buffer area, it is determined not to perform the unlocking operation, but to perform S624. Finally, when the user further approaches the vehicle, and the new second positioning result appears in the unlocking area for the first time, S626 is performed, to smoothly complete an imperceptible unlocking service.

When a parking place of the vehicle changes from the site A to the site B, the first mapping relationship in the data storage area of the vehicle needs to be replaced with the second mapping relationship corresponding to the site B. A specific unlocking process 630 of the vehicle on the site B is as follows.

S631: The vehicle completes parking on the site B.

It should be understood that the site B is a specific example of the second scenario. For example, the site B may be an open-air parking lot.

S632: The vehicle detects the operation of opening and closing the vehicle door, and the state that no person is in the vehicle, and determines that the unlocking/locking requirement of the vehicle is the locking requirement.

S633: The vehicle performs a scanning operation on the external environment, to obtain second environment data, and uploads the second environment data to the cloud server.

S634: The vehicle receives, from the cloud server, the second mapping relationship corresponding to the second environment data, and overwrites the first mapping relationship with the second mapping relationship.

It should be understood that a process of receiving the second mapping relationship in S634 is similar to a process of receiving the first mapping relationship in S614. For a part that is not described in detail, refer to S614.

A subsequent positioning locking process is similar to that in S615 to S617. Details are not described herein again.

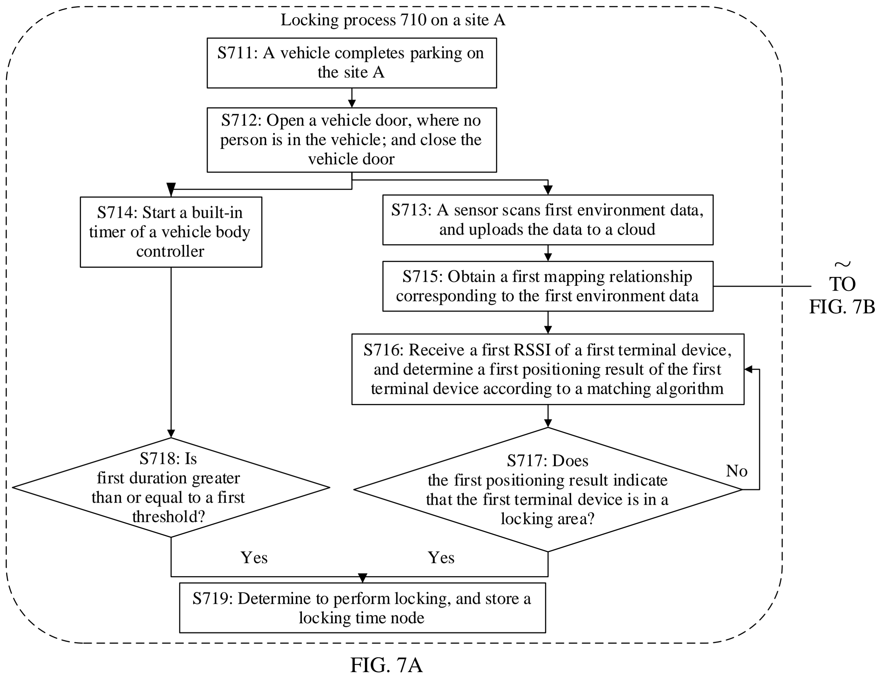

To further avoid repeated unlocking and locking, and implement fault tolerance avoidance for a positioning unlocking/locking process based on a scenario-related mapping relationship, a constraint of a time factor and/or a constraint of a situation factor may be further added, to further enhance user experience. The following provides detailed descriptions with reference to FIG. 7A to FIG. 8B.

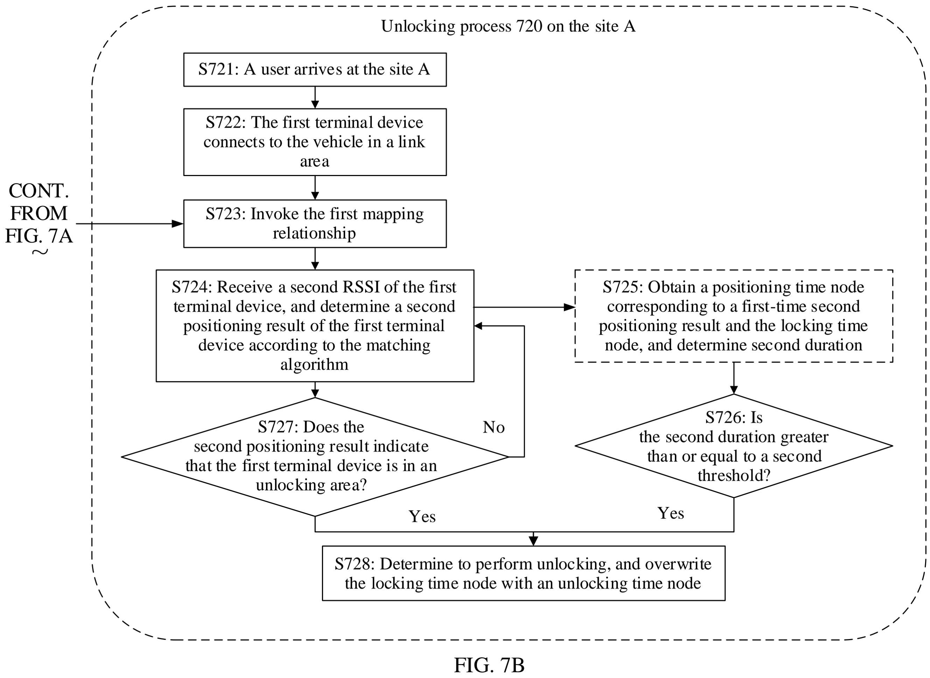

FIG. 7A and FIG. 7B are a schematic flowchart of still another unlocking/locking method according to an embodiment of this application.

First, a meaning of a specific parameter used for the constraint of the time factor is briefly described. A first threshold T1 is a time interval constraint that needs to be satisfied between time when the user gets off the vehicle and closes the vehicle door and time when the locking operation is performed. A second threshold T2 is a time interval constraint that needs to be satisfied between an imperceptible locking operation and imperceptible unlocking. A third threshold T3 is a time interval constraint that needs to be satisfied between a defensive locking operation and imperceptible unlocking.

In a possible implementation, the first threshold T1 may be determined based on a range of the locking area and a walking speed of the user, or may be determined based on a range of the buffer area and the walking speed of the user.

For example, the range of the locking area may be 6 m to 10 m away from the intelligent driving vehicle, the walking speed of the user is 1.2 m/s, and a minimum value of the first threshold T1 may be 6 m/1.2 (m/s)=5s. The range of the buffer area may be 3 m to 6 m away from the intelligent driving vehicle, the walking speed of the user is 1.2 m/s, and a minimum value of the first threshold T1 may alternatively be 3 m/1.2 (m/s)=2.5s.

In this way, the range of the locking operation is expanded from the locking area to the buffer area. This can improve the speed of imperceptible locking.

In a possible implementation, the second threshold T2 may be determined based on a distance between the locking area and the unlocking area and the walking speed of the user.

For example, the range of the locking area may be 6 m to 10 m, a range of the unlocking area is 0 m to 3 m, a distance between the locking area and the unlocking area may be maximally 10-3=7 m and minimally 6-3=3 m, the walking speed of the user is 1.2 m/s, and a value range of the second threshold T2 may be 2.5s to 5.83s.

This prevents the vehicle from being repeatedly locked and unlocked, thereby enhancing user experience.

In a possible implementation, a value of the third threshold T3 may be set by the user.

It should be understood that a scenario in which the third threshold T3 takes effect is that the vehicle has completed one-time imperceptible unlocking, but the user does not open the vehicle door, when no door opening operation of the user is detected, it is determined to perform defensive locking, and the third threshold T3 indicates an unlocking time node of the vehicle after defensive locking.

In this way, safety of imperceptible unlocking/locking can be further improved, and user experience can be improved.

Optionally, the first threshold T1, the second threshold T2, and the third threshold T3 may all be reduced by specified duration based on the foregoing theoretical values. The specified duration is duration reserved for data processing, and the specified duration may be set by the user. For example, the specified duration is 2s.

With reference to FIG. 7A and FIG. 7B, the following describes in detail the unlocking/locking method with reference to the time factor and the mapping relationship based on the parking scenario.

A locking process 710 of the vehicle on the site A is as follows.

S711: The vehicle completes parking on the site A.

S712: The vehicle detects the operation of opening and closing the vehicle door, and the state that no person is in the vehicle, and determines that the unlocking/locking requirement of the vehicle is the locking requirement.

S713: The vehicle performs the scanning operation on the external environment, to obtain the first environment data, and uploads the first environment data to the cloud server.

In addition, in S714, after S712, a timer in a vehicle body controller is started.

It should be understood that the timer is used to record a time period after the user gets off the vehicle.

S715: The vehicle receives, from the cloud server, the first mapping relationship corresponding to the first environment data.

S716: The vehicle receives the first RSSI from the first terminal device, and determines the first positioning result of the first terminal device according to the matching algorithm.

It should be understood that the steps S711, S712, S713, S715, and S716 are similar to related steps in FIG. 6A and FIG. 6B. For a part that is not described in detail, refer to S611 to S615.

S717: The vehicle determines whether the first positioning result indicates that the first terminal device is in the locking area.

If the first positioning result indicates that the first terminal device is in the non-locking area, S716 is performed again, to obtain the new first positioning result based on the RSSI data sent by the first terminal device.

If the first positioning result indicates that the first terminal device is in the locking area, in S718, the vehicle determines whether first duration is greater than or equal to the first threshold T1.

It should be understood that the first duration is determined using the timer, and the first duration is duration from time when the user gets off the vehicle to time when the positioning result is obtained.

If the first duration is greater than or equal to the first threshold T1, S719 is performed, to determine to perform locking, and store a locking time node x.

If the first duration is less than the first threshold T1, a smart device does not perform the locking operation.

It should be understood that a manner of determining the first threshold T1 is described above, and details are not described herein again.

For example, if the range of the locking area is 6 m to 10 m, and the walking speed of the user is 1.2 m/s, the minimum value of the first threshold T1 is 6/1.2=5s. When the first positioning result indicates that the first terminal device of the user is in the unlocking area, and the first duration is less than 5s, the vehicle body controller does not have automatic locking permission, and the vehicle does not perform the locking operation. As the user carrying the first terminal device gradually moves away from the vehicle to the buffer area, the new first positioning result indicates that the first terminal device is in the buffer area. In this case, the first duration is still less than 5s, the vehicle body controller still does not have the automatic locking permission, and the vehicle does not perform the locking operation. Finally, after the user moves away from the vehicle to the locking area, the new first positioning result indicates that the first terminal device is in the locking area. In addition, in this case, the first duration is already greater than or equal to 5s. The automatic locking permission is granted to vehicle body controller. The vehicle performs the locking operation, to smoothly complete a passive moving-away locking service, and stores the automatic locking time node x in the vehicle body controller.

An unlocking process 720 of the vehicle on the site A is as follows.

S721: The first terminal device of the user determines that the user arrives at the site A.

S722: The first terminal device connects to the vehicle in the link area.

S723: The vehicle invokes the first mapping relationship obtained in S715 in the locking process 710.

S724: The vehicle receives the second RSSI from the first terminal device, and determines the second positioning result of the first terminal device according to the matching algorithm.

It should be understood that S721 to S724 are similar to S621 to S624 in the unlocking process 620. For detailed explanations, refer to S621 to S624. Details are not described herein again.

When determining the second positioning result of the first terminal device, optionally, in S725, the vehicle obtains a time node y corresponding to the first-time second positioning result and a locking time node x in S719 in the locking process 710, and determines second duration.

Specifically, the second duration is a time period between a time node b and a time node a. In other words, the second duration is duration from time when the vehicle performs the locking operation to the time when the positioning result is obtained.

S726: The vehicle determines whether the second duration is greater than or equal to the second threshold T2.

It should be understood that the second threshold T2 has been described in detail above, and details are not described herein again.

If the second duration is greater than or equal to the second threshold T2, the vehicle has imperceptible unlocking permission. If the second duration is less than the second threshold T2, the vehicle does not have the imperceptible unlocking permission.

For example, the second threshold T2 may be 5s. When the second duration is greater than or equal to 5s, the vehicle has the imperceptible unlocking permission.

S727: The vehicle determines whether the second positioning result indicates that the first terminal device is in the unlocking area.

If the second positioning result indicates that the first terminal device is in the unlocking area, and the vehicle has the imperceptible unlocking permission, S728 is performed, to determine to perform unlocking, and overwrite the locking time node x with an unlocking time node z.

If the second positioning result indicates that the first terminal device is in the non-unlocking area, S625 is performed again, to obtain the new second positioning result based on the RSSI data sent by the first terminal device.

For example, when the value of the second threshold T2 is 5s, if the second duration is greater than or equal to the second threshold T2, the vehicle has the imperceptible unlocking permission. When the second positioning result indicates that the first terminal device of the user is in the locking area, the vehicle does not perform an automatic unlocking operation. As the user gradually approaches the vehicle, when the new second positioning result indicates that the first terminal device of the user is in the unlocking area, the vehicle performs the automatic unlocking operation, to smooth complete a passive entry service. In addition, the vehicle stores the unlocking time node z in the vehicle body controller, and overwrites the original locking time node x.

Optionally, within a period of time after the unlocking time node z, if the user does not open the vehicle door, it is determined to perform automatic defensive locking, and a time node o of automatic anti-theft locking is used to overwrite the original unlocking time node z.

Optionally, when third duration is greater than or equal to the third threshold T3, and the positioning result of the first terminal device of the user indicates that the first terminal device is in the unlocking area, it is determined to perform the unlocking operation. The third duration is duration from time when the vehicle performs the defensive locking operation to the time when the positioning result is obtained.

In the foregoing technical solution, applying the scenario-related mapping relationship to the unlocking/locking operation, in conjunction with the constraint of the time factor, can further avoid repeated unlocking and locking, thereby enhancing user experience.

Similarly, to further avoid repeated unlocking and locking, in addition to the constraint of the time factor, the constraint of the situation factor may be further added.

It is first noted that two aspects: an unlocking/locking scenario and a behavior pattern of the user, are mainly considered for the situation factor.

The unlocking/locking scenario mainly includes a first unlocking scenario, a first locking scenario, and a second locking scenario. The unlocking/locking scenario is used to expand an unlocking/locking enabling range. For example, a range of imperceptible locking is expanded from the original locking area to the buffer area. A range of imperceptible unlocking is expanded from the original unlocking area to the buffer area.

When the vehicle meets a triggering condition that vehicle doors are all closed and a device power supply is turned off, the vehicle is triggered to identify the unlocking/locking scenario. If the vehicle fails to identify the triggering condition, recognition of the triggering condition is initiated for the second time after duration of a fourth threshold.

A determining condition of the first unlocking scenario may be as follows: A vehicle lock status of the vehicle is locking, and a power supply of the vehicle is in a turn-off state, namely, a power-off state. When the foregoing condition is met, it is determined that the vehicle is in the first unlocking scenario, and the range (which may also be referred to as a third range) of imperceptible unlocking is expanded from the unlocking area to the unlocking area and the buffer area.

A determining condition of the first locking scenario may be as follows: The vehicle lock status of the vehicle is unlocking, no person is in the vehicle, and the power supply of the vehicle is in the turn-off state. When the foregoing determining condition is met, it is determined that the vehicle is in the first locking scenario, and the range (which may also be referred to as a first range) of imperceptible locking is expanded from the locking area to the locking area and the buffer area.

A determining condition of the second locking scenario may be as follows: The vehicle lock status of the vehicle is switched from the locking state to the unlocking state, no person is in the vehicle, and the power supply of the vehicle is in the turn-off state. When the foregoing determining condition is met, it is determined that the vehicle is in the second locking scenario, and the range (which may also be referred to as a second range) of imperceptible locking is expanded from the locking area to the locking area and the link area.

A target behavior pattern of the user may include an approach behavior of the user, a moving-away behavior of the user, and a static behavior of the user.

In a possible implementation, after the positioning result is initially determined, the target behavior pattern of the user may be determined by obtaining a motion direction and a motion step count of the user within preset duration.

A determining condition of the approach behavior of the user may be as follows: A first step count for the user to walk from the locking area to the buffer area is at least N1-1 steps, where N1 is an average step count for walking from the locking area to the buffer area. When the foregoing determining condition is met, the vehicle may perform imperceptible unlocking.

A determining condition of the moving-away behavior of the user may be as follows: A second step count for the user to walking from the vehicle to the buffer area is at least N2-1 steps, where N2 is an average step count for walking from the vehicle to the buffer area. When the foregoing determining condition is met, the vehicle may perform imperceptible locking.

A determining condition used for the static behavior may be as follows: The user has no walking step count. In this case, the vehicle has no imperceptible locking or imperceptible unlocking permission.

In a possible implementation, the step count of the user may be obtained via the first terminal device. Then, the first terminal device transmits the step count of the user to the vehicle.

For example, a behavior direction and the step count of the user may be obtained via a GPS, an acceleration sensor, and a three-axis gyro of the first terminal device, and using GPS information of the vehicle.

A triggering condition for identifying the behavior pattern of the user is as follows: The positioning result of the first terminal device of the user has been determined.

A triggering condition for resetting and identifying the behavior pattern of the user is as follows: A behavior direction of the first terminal device of the user changes.

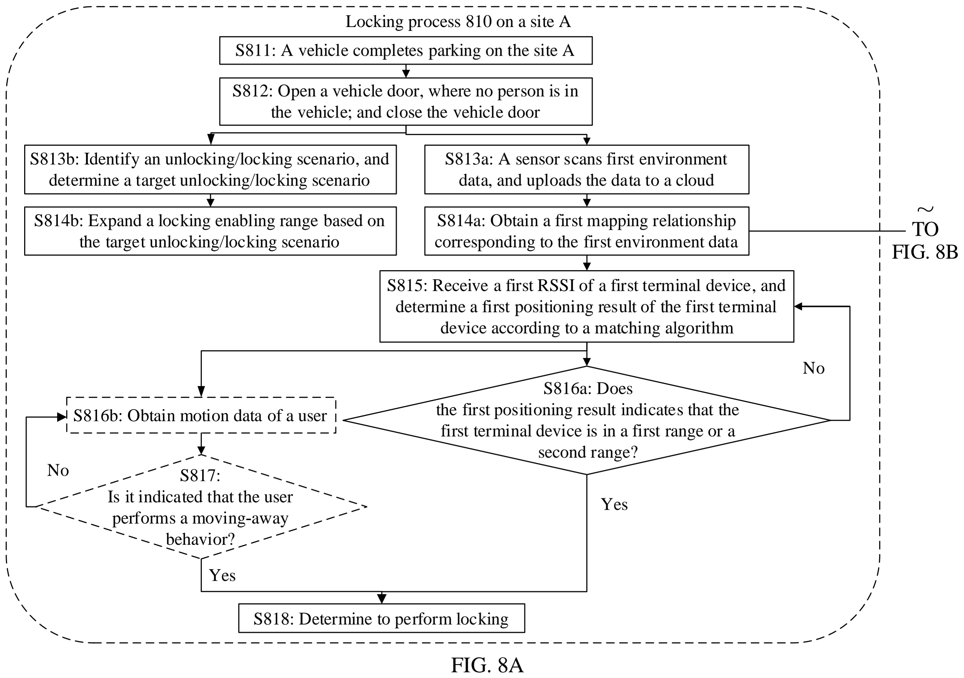

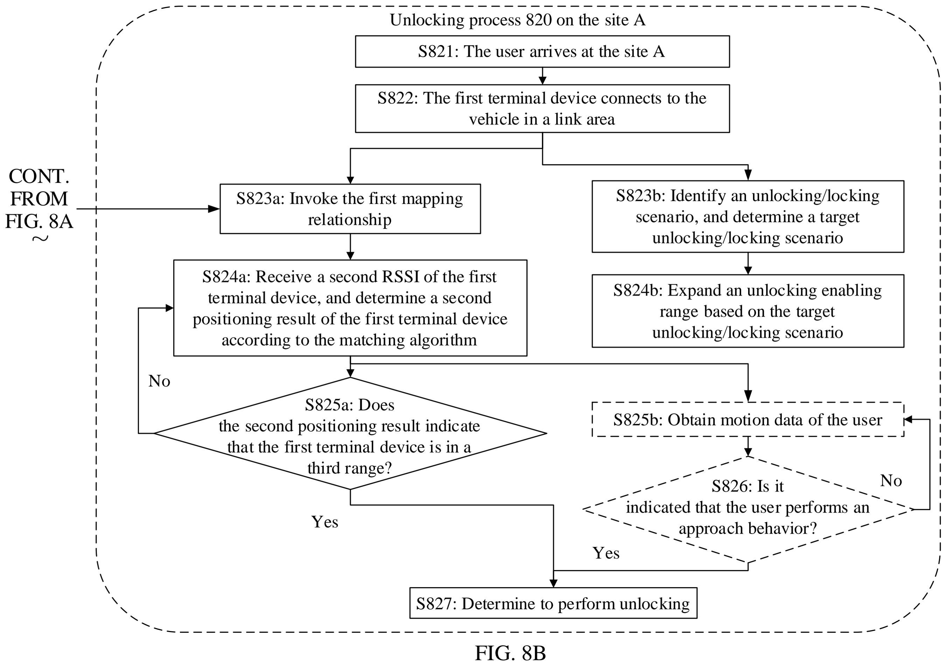

The situation factor is combined with the unlocking/locking method with reference to the mapping relationship based on the parking scenario shown in FIG. 5 to FIG. 6B. A general procedure may be summarized as follows: The vehicle arrives at the site A and completes parking, the vehicle detects that the user gets off the vehicle and closes the vehicle door, and the vehicle has a power supply power-off locking requirement, the vehicle is triggered to identify the unlocking/locking scenario, to obtain a target unlocking/locking scenario. The target unlocking/locking scenario is one of the foregoing three unlocking and locking scenarios. In addition, the vehicle is triggered to perform the positioning process shown in FIG. 5 or FIG. 6A and FIG. 6B, to obtain the first positioning result or the second positioning result. After the first positioning result or the second positioning result is obtained for the first time, the vehicle is triggered to obtain the target behavior pattern of the user. Finally, with reference to the target behavior pattern of the user and the target unlocking/locking scenario, it may be determined that the vehicle is to be unlocked or locked. Specifically, detailed descriptions are provided with reference to FIG. 8A and FIG. 8B.

FIG. 8A and FIG. 8B are a schematic flowchart of yet still another unlocking/locking method according to an embodiment of this application.

It is assumed that the range of the unlocking area of the vehicle is (a, b), for example, 0 m to 3 m, the range of the buffer area is (b, c), for example, 3 m to 6 m, the range of the locking area is (c, d), for example, 6 m to 10 m, a range of the link area is (d, e), for example, 10 m to 30 m, and the walking speed of the user is v, for example, 0.5 m/step. The average step count from the locking area to the buffer area is N1, and N1=((d-c)/v+(d-b)/v)×1/2, for example, 11 steps. The average step count for walking from the vehicle to the buffer area is N2, and N2=((a+b)/v+(a+c)/v)×1/2, for example, 9 steps.

As shown in FIG. 8A and FIG. 8B, a locking process 810 of the vehicle on the site A is as follows.

S811: The vehicle completes parking on the site A.

S812: The vehicle detects the operation of opening and closing the vehicle door, and the state that no person is in the vehicle, and determines that the unlocking/locking requirement of the vehicle is the locking requirement.

S813a: The vehicle performs the scanning operation on the external environment, to obtain the first environment data, and uploads the first environment data to the cloud server.

S814a: The vehicle receives, from the cloud server, the first mapping relationship corresponding to the first environment data.

It should be understood that the steps S811, S812, S813a, and S814a are similar to related steps in FIG. 6A and FIG. 6B. For a part that is not described in detail, refer to S611 to S614.

In addition, in S813b, after S812, identification of the unlocking/locking scenario is triggered, to determine the target unlocking/locking scenario.

It should be understood that the target unlocking/locking scenario is any scenario in the foregoing unlocking/locking scenario. Conditions that need to be met in different types of unlocking/locking scenarios have been described in detail above.

S814b: Expand a locking enabling range based on the target unlocking/locking scenario.

In a possible implementation, when the target unlocking/locking scenario is the first unlocking scenario, the locking enabling range is expanded from the locking area to the locking area and the buffer area.

In a possible implementation, when the target unlocking/locking scenario is the second unlocking scenario, the locking enabling range is expanded from the locking area to the locking area and the link area.

Detailed determining conditions of the first unlocking/locking and the second unlocking/locking have been described in detail above. Details are not described herein again.

S815: The vehicle receives the first RSSI from the first terminal device, and determines the first positioning result of the first terminal device according to the matching algorithm.

It should be understood that the step S815 is similar to a related step in FIG. 6A and FIG. 6B. For a part that is not described in detail, refer to S615.

S816a: The vehicle determines whether the first positioning result indicates that the first terminal device is in the first range or the second range.

When the target unlocking/locking scenario is the first locking scenario, the locking enabling range is expanded to the locking area and the buffer area. The first range is a range between the buffer area and the locking area.

When the target unlocking/locking scenario is the second locking scenario, the locking enabling range is expanded to the locking area and the link area. The second range is a range between the link area and the locking area.

In a possible implementation, when it is determined that the first positioning result indicates that the first terminal device is in the first range or the second range, automatic vehicle locking permission is enabled.

It should be understood that a condition for enabling the automatic vehicle locking permission may be that the first terminal device is in the first range or the second range, which is indicated by the first positioning result in S816a. Herein, enabling the automatic vehicle locking permission is not limited to being necessarily the condition, and there may be another condition.

Optionally, in S816b, motion data of the user is obtained.

The motion data of the user may include at least one of the motion direction of the user, the motion step count, or the target behavior pattern of the user.

In a possible implementation, the vehicle sends a first request. Correspondingly, the first terminal device receives the first request, and sends the motion data of the user within the preset duration to the vehicle based on the first request. The motion data is used to determine to perform the locking operation or the unlocking operation.

For example, after the first positioning result is determined for the first time, the first terminal device of the user is triggered to record the motion direction and the first step count of the user. The first terminal device determines the target behavior pattern of the user based on the motion direction and the first step count of the user. The first terminal device sends the target behavior pattern of the user. Correspondingly, the vehicle receives the target behavior pattern of the user.

In other words, the target behavior pattern of the user is determined by the first terminal device. In other words, information indicated by the motion data of the user is determined by the first terminal device.

For another example, after the first positioning result is determined for the first time, the first terminal device of the user is triggered to record the behavior direction and the first step count of the user. The first terminal device sends the behavior direction and the first step count of the user. Correspondingly, the vehicle receives the behavior direction and the first step count of the user. The vehicle determines the target behavior pattern of the user based on the behavior direction and the first step count of the user.

In other words, the target behavior pattern of the user is determined by the vehicle. In other words, information indicated by the motion data of the user is determined by the vehicle.

It should be understood that the target behavior pattern of the user may be one of the approach behavior of the user, the moving-away behavior of the user, and the static behavior of the user. For a detailed determining condition, refer to the foregoing descriptions. Details are not described herein again.

Optionally, in S817, it is determined whether the motion data indicates that the user performs the moving-away behavior.

For example, after the first positioning result is determined, if the behavior direction of the user is moving away from the vehicle, and the first step count is greater than N1, the motion data indicates that the user performs the moving-away behavior.

Optionally, when the motion data indicates that the user performs the moving-away behavior, the automatic vehicle locking permission is enabled.

It should be understood that a triggering condition for enabling the automatic vehicle locking permission may be the condition in S816a, or may be that the motion data indicates that the user performs the moving-away behavior in S817, and there is no sequence.

When determining results of both S817 and S816a are "yes", S818 is performed, to be specific, the vehicle determines to perform locking.

For example, in S816a, the first positioning result indicates that the first terminal device is in the first range or the second range, and the automatic vehicle locking permission is enabled. In S817, after it is determined that the motion data indicates that the user performs the moving-away behavior, S818 is performed, to be specific, the vehicle determines to perform locking.

For example, in S817, after it is determined that the motion data indicates that the user performs the moving-away behavior, the automatic vehicle locking permission is enabled. In S816a, the first positioning result indicates that the first terminal device is in the first range or the second range, and S818 is performed, to be specific, the vehicle determines to perform locking.

For example, in S816a, the first positioning result indicates that the first terminal device is in the first range or the second range, and in S817, when it is determined that the motion data indicates that the user performs the moving-away behavior, S818 is performed, to determine to perform locking.

An unlocking process 820 of the vehicle on the site A is as follows.

S821: The first terminal device of the user determines that the user arrives at the site A.

S822: The first terminal device connects to the vehicle in the link area.

S823a: The vehicle invokes the first mapping relationship obtained in S814a in the locking process 810.

S824a: The vehicle receives the second RSSI from the first terminal device, and determines the second positioning result of the first terminal device according to the matching algorithm.

It should be understood that S821 to S824a are similar to S621 to S624 in the unlocking process 620. For detailed explanations, refer to S621 to S624. Details are not described herein again.

In addition, in S823b, after S822, identification of the unlocking/locking scenario is triggered, to determine the target unlocking/locking scenario.

The target unlocking/locking scenario may be the first unlocking scenario. The determining condition of the first unlocking scenario has been described in detail above.

S824b: The vehicle expands the unlocking enabling range based on the target unlocking/locking scenario.

In a possible implementation, when the target unlocking/locking scenario is the first unlocking scenario, the unlocking range is expanded from the unlocking area to the unlocking area and the buffer area.

After the second positioning result is determined in S824a, in S825a, the vehicle determines whether the second positioning result indicates that the first terminal device is in the third range.

In a possible implementation, when it is determined that the second positioning result indicates that the first terminal device is in the third range, an automatic vehicle unlocking permission is enabled.

It should be understood that a condition for enabling the automatic vehicle unlocking permission may be that the first terminal device is in the third range, which is indicated by the second positioning result in S816a. Herein, enabling the automatic unlocking permission is not limited to being necessarily the condition, and there may be another condition.

Optionally, in S825b, the vehicle obtains the motion data of the user.

Similarly, in the unlocking process 820, the information indicated by the motion data of the user may be determined by the vehicle, or may be sent to the vehicle after being determined by the first terminal device of the user. Detailed descriptions are similar to those in S816b in the locking process 810. Details are not described herein again.

It should be understood that the target behavior pattern of the user may be one of the approach behavior of the user, the moving-away behavior of the user, and the static behavior of the user. In other words, the motion data of the user may indicate that the user performs one of the approach behavior, the moving-away behavior, and the static comfort of the user. For a detailed determining condition, refer to the foregoing descriptions. Details are not described herein again.

Optionally, in S826, it is determined whether the motion data indicates that the user performs the approach behavior.

For example, after the second positioning result is determined, if the behavior direction of the user is approaching the vehicle, and the second step count is greater than N2, the motion data indicates that the user performs the approach behavior.

Optionally, when the motion data indicates that the user performs the approach behavior, the automatic vehicle unlocking permission is enabled.

It should be understood that a triggering condition for enabling the automatic vehicle unlocking permission may be the condition in S825a, or may be whether the motion data indicates that the user performs the moving-away behavior in S826, and there is no sequence.

When determining results of both S825a and S826 are "yes", S827 is performed, to be specific, performing unlocking is determined.

For example, in S825a, the second positioning result indicates that the first terminal device is in the third range, and the automatic vehicle unlocking permission is enabled. In S826, after it is determined that the motion data indicates that the user performs the approach behavior, S827 is performed, to intelligently determine to perform unlocking.

For example, in S826, after it is determined that the motion data indicates that the user performs the approach behavior, the automatic vehicle unlocking permission is enabled. In S825a, the second positioning result indicates that the first terminal device is in the third range, and S827 is performed, to determine to perform unlocking.

For example, in S825a, the second positioning result indicates that the first terminal device is in the third range, and in S826, when it is determined that the motion data indicates that the user performs the approach behavior, S827 is performed, to be specific, the vehicle determines to perform unlocking.

FIG. 7A to FIG. 8B respectively show the unlocking/locking method with reference to the time factor and the mapping relationship based on the parking scenario, and the unlocking/locking method in consideration of the situation factor and the mapping relationship based on the parking scenario. In this way, repeated unlocking and locking can be further avoided. Similarly, the unlocking/locking method may be further combined with the mapping relationship based on the parking scenario, the time factor, and the situation factor. The situation factor is added on a basis of the method shown in FIG. 7A and FIG. 7B, or the time factor is added on a basis of the method shown in FIG. 8A and FIG. 8B.

For example, for a locking process, the vehicle determines, only when the first positioning result meets the determining condition, the motion data of the user indicates that the user performs the moving-away behavior, and the first duration is greater than or equal to the first threshold T1, to perform locking.

For example, for an unlocking process, the vehicle determines, only when the second positioning result meets the determining condition, the motion data of the user indicates that the user performs the approach behavior, and the second duration is greater than or equal to the second threshold T2, to perform unlocking.

It should be understood that there may alternatively be another specific implementation with reference to the mapping relationship based on the parking scenario, the time factor, and the situation factor. Details are not described herein by using an example.

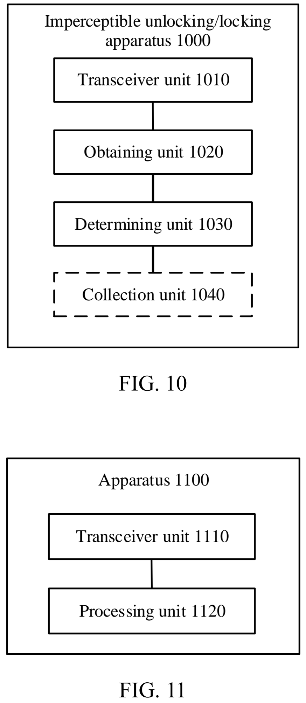

The foregoing content is the unlocking/locking method in embodiments of this application. The following describes in detail an unlocking/locking apparatus with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details are not described herein again.

An embodiment of this application further provides an apparatus configured to implement any one of the foregoing methods, for example, provides an apparatus, including a unit (or means) configured to implement the steps performed by the vehicle or the computing platform in any one of the foregoing methods.

FIG. 10 is a block diagram of an unlocking/locking apparatus 1000 according to an embodiment of this application. The apparatus 1000 shown in FIG. 10 may be located in the vehicle 320 shown in FIG. 3. Alternatively, the apparatus 1000 shown in FIG. 10 may be located in the cloud server 330 shown in (b) of FIG. 3.

As shown in FIG. 10, the apparatus 1000 includes: an obtaining unit 1020, configured to obtain a first mapping relationship when a vehicle is in a first scenario, where the first mapping relationship includes a mapping relationship between a location of a terminal device and signal strength in the first scenario; a transceiver unit 1010, configured to receive a first signal sent by a first terminal device of a user; and a determining unit 1030, configured to determine, based on signal strength of the first signal and the first mapping relationship, whether to perform an unlocking operation or a locking operation.

For example, both the obtaining unit 1010 and the determining unit 1030 may be the computing platform in FIG. 1, or a processing circuit, the processor, or a controller in the computing platform. For example, the obtaining unit 1410 is the processor 151 in the computing platform. The processor 151 may obtain the first mapping relationship.

The functions implemented by the obtaining unit 1010 and the functions implemented by the determining unit 1030 may be respectively implemented by different processors, or some functions may be implemented by a same processor, or all the functions may be implemented by a same processor. This is not limited in embodiments of this application.

Optionally, the apparatus 1000 may further include a collection unit 1040. The collection unit 1040 is configured to collect first environment data around the vehicle.

It should be understood that, for a part that is not described in detail, refer to the foregoing method embodiment.

FIG. 11 is a block diagram of an apparatus 1100 according to an embodiment of this application. The apparatus 1100 shown in FIG. 11 may be located in the vehicle 320 shown in FIG. 3, or may be located in the cloud server 330 shown in (b) of FIG. 3.

As shown in FIG. 11, the apparatus 1100 includes a transceiver unit 1110 and a processing unit 1120. The transceiver unit 1110 is configured to receive first environment data, where the first environment data includes environment data around a vehicle in a first scenario. The processing unit 1120 is configured to determine a first mapping relationship from a plurality of mapping relationships based on the first environment data, where the plurality of mapping relationships include mapping relationships between a location of a terminal device and signal strength in a plurality of scenarios, the first mapping relationship includes a mapping relationship between the location of the terminal device and the signal strength in the first scenario, and the plurality of scenarios include the first scenario. The transceiver unit 1110 is configured to send the first mapping relationship.

The apparatus 1100 shown in FIG. 11 may alternatively be located in the terminal device 310 shown in (a) in FIG. 3 or (b) in FIG. 3.

As shown in FIG. 11, the apparatus 1100 includes a transceiver unit 1110 and a processing unit 1120. The transceiver unit 1110 is configured to receive a first request. The processing unit 1120 is configured to send motion data of a user within preset duration to a vehicle based on the first request, where the motion data is used to determine to perform a locking operation or an unlocking operation.

For example, the motion data may include at least one of a motion direction of the user, a motion step count, or a target behavior pattern of the user. The target behavior pattern may include a moving-away behavior of the user, an approach behavior of the user, and a static behavior of the user.

It should be understood that division into the units in the foregoing apparatus is merely logical function division. During actual implementation, all or some of the units may be integrated into a physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by a programmable logic device (programmable logic device, PLD). A field programmable gate array (field programmable gate array, FPGA) is used as an example. The field programmable gate array may include a large quantity of logic gate circuits. A configuration file is used to configure a connection relationship between the logic gate circuits, to implement the functions of some or all of the units. All the units in the foregoing apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In this embodiment of this application, the processor is a circuit that has a signal processing capability. In an implementation, the processor may be a circuit that has an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is a hardware circuit, for example, an FPGA, implemented by an ASIC or a PLD. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system on a chip (system-on-a-chip, SoC). The SoC may include at least one processor, configured to implement any one of the foregoing methods or implement functions of the units in the apparatus. Types of the at least one processor may be different, for example, the at least one processor includes a CPU and an FPGA, a CPU and an artificial intelligence processor, or a CPU and a GPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated and implemented in a form of a SoC. The SoC may include at least one processor, configured to implement any one of the foregoing methods or implement functions of the units in the apparatus. Types of the at least one processor may be different, for example, the at least one processor includes a CPU and an FPGA, a CPU and an artificial intelligence processor, or a CPU and a GPU.

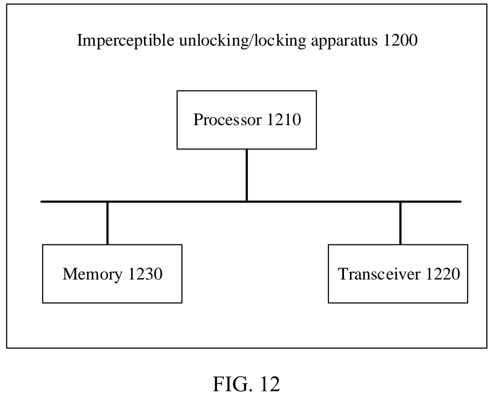

FIG. 12 is a block diagram of a structure of an unlocking/locking apparatus 1200 according to an embodiment of this application.

The unlocking/locking apparatus 1200 shown in FIG. 12 may include a processor 1210, a transceiver 1220, and a memory 1230. The processor 1210, the transceiver 1220, and the memory 1230 are connected through an internal connection path. The memory 1230 is configured to store instructions. The processor 1210 is configured to execute the instructions stored in the memory 1230, to enable the transceiver 1220 to receive/send some parameters. Optionally, the memory 1230 may be coupled to the processor 1210 through an interface, or may be integrated with the processor 1210.

It should be noted that the transceiver 1220 may include but is not limited to a transceiver apparatus like an input/output interface (input/output interface), to implement communication between the apparatus 1200 and another device or a communication network.

In an implementation process, the steps of the foregoing methods may be completed through a hardware integrated logic circuit in the processor 1210 or by using instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1230. The processor 1210 reads information in the memory 1230, and completes the steps of the foregoing method in combination with the hardware in the processor. To avoid repetition, details are not described herein again.

The processor 1210 may be a general-purpose CPU, a microprocessor, an ASIC, a GPU, or one or more integrated circuits, and is configured to execute a related program, to implement the unlocking/locking method in the method embodiments of this application. The processor 1210 may alternatively be an integrated circuit chip and has a signal processing capability. In a specific implementation process, the steps of the unlocking/locking methods in this application may be completed through a hardware integrated logic circuit in the processor 1210 or by using instructions in a form of software. The processor 1210 may alternatively be a general-purpose processor, a DSP, an ASIC, an FPGA, another programmable logic device, a discrete gate, a transistor logic device, or a discrete hardware component, and may implement or perform the methods, the steps, and logic block diagrams that are disclosed in embodiments of this application. The general-purpose processor may be a microprocessor, or the processor may alternatively be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1230. The processor 1210 reads information in the memory 1230, and performs the unlocking/locking methods in the method embodiments of this application in combination with hardware in the processor.

The memory 1230 may be a read-only memory (read-only memory, ROM), a static storage device, a dynamic storage device, or a random access memory (random access memory, RAM).

The transceiver 1220 may be but is not limited to a transceiver apparatus, for example, a transceiver, to implement communication between the apparatus 1200 and another device.

An embodiment of this application further provides an unlocking/locking system. The system may include a vehicle, a first terminal device, and a cloud server, or the system may include the vehicle and the first terminal device.

For example, the system may be shown in (a) in FIG. 3, or the system may be shown in (b) in FIG. 3.

The vehicle may include the unlocking/locking apparatus 1000, and the cloud server may include the apparatus 1100.

An embodiment of this application further provides a vehicle. The vehicle may include the unlocking/locking apparatus 1000.

An embodiment of this application further provides a cloud server. The cloud server may include the apparatus 1100.

An embodiment of this application further provides a first terminal device. The first terminal device may include the apparatus 1100.

An embodiment of this application further provides a computer program product. The computer program product includes computer program code. When the computer program code is run on a computer, the computer is enabled to perform the foregoing methods.

An embodiment of this application further provides a computer-readable medium. The computer-readable medium stores program code. When the computer program code is run on a computer, the computer is enabled to perform the foregoing methods.

In an implementation process, the steps of the foregoing methods may be completed through a hardware integrated logic circuit in the processor or by using instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps of the foregoing methods in combination with the hardware in the processor. To avoid repetition, details are not described herein again.

It should be understood that, in this embodiment of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments disclosed in this specification can be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on an actual requirement, to achieve the objectives of the solutions in embodiments.

In addition, functional units in embodiments of this application may be integrated into one processing unit, or each of the units may exist alone physically, or two or more units are integrated into one unit.

The functions may be stored in a computer-readable storage medium when the functions are implemented in a form of a software functional unit and sold or used as an independent product. Based on such an understanding, the technical solutions of this application essentially, or a part contributing to the conventional technology, or some of the technical solutions may be implemented in a form of a software product. The software product is stored in a storage medium, and includes a plurality of instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An unlocking/locking method, comprising:
obtaining a first mapping relationship when a vehicle is in a first scenario, wherein the first mapping relationship comprises a mapping relationship between a location of a terminal device and signal strength in the first scenario;
receiving a first signal sent by a first terminal device of a user; and
determining, based on signal strength of the first signal and the first mapping relationship, whether to perform an unlocking operation or a locking operation.

2. The method according to claim 1, wherein obtaining the first mapping relationship when the vehicle is in the first scenario comprises:
collecting first environment data around the vehicle; and
determining, from a plurality of mapping relationships based on the first environment data, the first mapping relationship that matches the first scenario, wherein the plurality of mapping relationships comprise mapping relationships between the location of the terminal device and the signal strength in a plurality of scenarios, and the plurality of scenarios comprise the first scenario.

3. The method according to claim 1, wherein obtaining the first mapping relationship when the vehicle is in the first scenario comprises:
collecting first environment data around the vehicle in the first scenario;
sending the first environment data to a cloud server; and
receiving the first mapping relationship from the cloud server.

4. The method according to any one of claims 1 to 3, wherein determining, based on the signal strength of the first signal and the first mapping relationship, whether to perform the unlocking operation or the locking operation comprises:
determining a positioning result of the first terminal device from the first mapping relationship based on the signal strength of the first signal; and
determining, based on an area corresponding to the positioning result, whether to perform the unlocking operation or the locking operation.

5. The method according to claim 4, wherein determining, based on the area corresponding to the positioning result, whether to perform the unlocking operation or the locking operation comprises:
determining, when the positioning result indicates that the first terminal device is in an unlocking area, to perform the unlocking operation; or
determining, when the positioning result indicates that the first terminal device is in a locking area, to perform the locking operation; or
determining, when the positioning result indicates that the first terminal device is in a buffer area between the unlocking area and the locking area, not to perform the unlocking operation or the locking operation.

6. The method according to claim 4, wherein determining, based on the area corresponding to the positioning result, whether to perform the unlocking operation or the locking operation comprises:
determining a target unlocking/locking scenario;
expanding an operation range of the unlocking operation or the locking operation based on the target unlocking/locking scenario; and
determining, based on the area corresponding to the positioning result and an expanded operation range, to perform the locking operation or the unlocking operation.

7. The method according to claim 6, wherein a buffer area is comprised between an unlocking area and a locking area, and determining, based on the area corresponding to the positioning result and the expanded operation range, to perform the locking operation or the unlocking operation comprises:
when the positioning result is in a first range, determining to perform the locking operation, wherein the first range comprises a range between the buffer area and the locking area; or
when the positioning result is in a second range, determining to perform the locking operation, wherein the second range comprises a range between the locking area and a link area, and the locking area is located between the buffer area and the link area; or
when the positioning result is in a third range, determining to perform the unlocking operation, wherein the third range comprises a range between the unlocking area and the buffer area.

8. The method according to claim 6 or 7, wherein determining, based on the area corresponding to the positioning result and the expanded operation range, to perform the locking operation or the unlocking operation comprises:
obtaining motion data of the user within preset duration; and
determining, based on the area corresponding to the positioning result, the expanded operation range, and the motion data, to perform the locking operation or the unlocking operation.

9. The method according to claim 5, wherein determining, when the positioning result indicates that the first terminal device is in the locking area, to perform the locking operation comprises:
when the positioning result indicates that the first terminal device is in the locking area, and first duration is greater than or equal to a first threshold, determining to perform the locking operation, wherein the first duration is duration from time when the user gets off the vehicle to time when the positioning result is obtained.

10. The method according to claim 9, wherein after the locking operation is performed, determining, when the positioning result indicates that the first terminal device is in the unlocking area, to perform the unlocking operation comprises:
when the positioning result indicates that the first terminal device is in the unlocking area, and second duration is greater than or equal to a second threshold, determining to perform the unlocking operation, wherein the second duration is duration from time when the vehicle performs the locking operation to the time when the positioning result is obtained.

11. The method according to claim 10, wherein after the unlocking operation is performed, determining, when the positioning result indicates that the first terminal device is in the unlocking area, to perform the unlocking operation comprises:
when no door opening operation of the user is detected, determining to perform a defensive locking operation; and
when the positioning result indicates that the first terminal device is in the unlocking area, and third duration is greater than or equal to a third threshold, determining to perform the unlocking operation, wherein the third duration is duration from time when the vehicle performs the defensive locking operation to the time when the positioning result is obtained.

12. The method according to any one of claims 1 to 11, wherein the method further comprises:
obtaining a second mapping relationship when the vehicle is in a second scenario, wherein the second mapping relationship comprises a mapping relationship between the location of the terminal device and the signal strength in the second scenario;
receiving a second signal sent by the first terminal device of the user; and
determining, based on signal strength of the second signal and the second mapping relationship, whether to perform the unlocking operation or the locking operation.

13. An unlocking/locking apparatus, wherein the apparatus comprises an obtaining unit, a transceiver unit, and a determining unit, wherein
the obtaining unit is configured to obtain a first mapping relationship when a vehicle is in a first scenario, wherein the first mapping relationship comprises a mapping relationship between a location of a terminal device and signal strength in the first scenario;
the transceiver unit is configured to receive a first signal sent by a first terminal device of a user; and
the determining unit is configured to determine, based on signal strength of the first signal and the first mapping relationship, whether to perform an unlocking operation or a locking operation.

14. The apparatus according to claim 13, wherein the apparatus further comprises a data collection unit, wherein
the collection unit is configured to collect first environment data around the vehicle in the first scenario; and
the obtaining unit is specifically configured to determine, from a plurality of mapping relationships based on the first environment data, the first mapping relationship that matches the first scenario, wherein the plurality of mapping relationships comprise mapping relationships between the location of the terminal device and the signal strength in a plurality of scenarios, and the plurality of scenarios comprise the first scenario.

15. The apparatus according to claim 14, wherein the apparatus further comprises a data collection unit, wherein
the collection unit is configured to collect first environment data around the vehicle in the first scenario; and
the transceiver unit is configured to:
send the first environment data to a cloud server; and
receive the first mapping relationship from the cloud server.

16. The apparatus according to any one of claims 13 to 15, wherein the determining unit is specifically configured to:
determine a positioning result of the first terminal device from the first mapping relationship based on the signal strength of the first signal; and
determine, based on an area corresponding to the positioning result, whether to perform the unlocking operation or the locking operation.

17. The apparatus according to claim 16, wherein the determining unit is specifically configured to:
when the positioning result indicates that the first terminal device is in an unlocking area, determine to perform the unlocking operation; or
when the positioning result indicates that the first terminal device is in a locking area, determine to perform the locking operation; or
when the positioning result indicates that the first terminal device is in a buffer area between the unlocking area and the locking area, determine not to perform the unlocking operation or the locking operation.

18. The apparatus according to claim 16, wherein the determining unit is specifically configured to:
determine a target unlocking/locking scenario;
expand an operation range of the unlocking operation or the unlocking operation based on the target unlocking/locking scenario; and
determine, based on the area corresponding to the positioning result and an expanded operation range, to perform the locking operation or the unlocking operation.

19. The apparatus according to claim 18, wherein a buffer area is comprised between an unlocking area and a locking area, and the determining unit is specifically configured to:
when the positioning result is in a first range, determine to perform the locking operation, wherein the first range comprises a range between the buffer area and the locking area; or
when the positioning result is in a second range, determine to perform the locking operation, wherein the second range comprises a range between the locking area and a link area, and the locking area is located between the buffer area and the link area; or
when the positioning result is in a third range, determine to perform the unlocking operation, wherein the third range comprises a range between the unlocking area and the buffer area.

20. The apparatus according to claim 18 or 19, wherein the determining unit is specifically configured to:
obtain motion data of the user within preset duration; and
determine, based on the area corresponding to the positioning result, the expanded operation range, and the motion data, to perform the locking operation or the unlocking operation.

21. The apparatus according to claim 17, wherein the determining unit is specifically configured to:
when the positioning result indicates that the first terminal device is in the locking area, and the first duration is greater than or equal to a first threshold, determine to perform the locking operation, wherein the first duration is duration from time when the user gets off the vehicle to time when the positioning result is obtained.

22. The apparatus according to claim 21, wherein after performing the locking operation, the determining unit is specifically configured to:
when the positioning result indicates that the first terminal device is in the unlocking area, and the second duration is greater than or equal to a second threshold, determine to perform the unlocking operation, wherein the second time is duration from time when the vehicle performs the locking operation to the time when the positioning result is obtained.

23. The apparatus according to claim 22, wherein after performing the unlocking operation, the determining unit is specifically configured to:
when no door opening operation of the user is detected, determine to perform a defensive locking operation; and
when the positioning result indicates that the first terminal device is in the unlocking area, and the third duration is greater than or equal to a third threshold, determine to perform the unlocking operation, wherein the third duration is duration from time when the vehicle performs the defensive locking operation to the time when the positioning result is obtained.

24. The apparatus according to any one of claims 13 to 23, wherein
the obtaining unit is further configured to obtain a second mapping relationship when the vehicle is in a second scenario, wherein the second mapping relationship comprises a mapping relationship between the location of the terminal device and the signal strength in the second scenario;
the transceiver unit is further configured to receive a second signal sent by the first terminal device of the user; and
the determining unit is further configured to determine, based on signal strength of the second signal and the second mapping relationship, whether to perform the unlocking operation or the locking operation.

25. An unlocking/locking apparatus, comprising:
a memory, configured to store a computer program; and
a processor, configured to execute the computer program stored in the memory, to enable the apparatus to perform the method according to any one of claims 1 to 12.

26. A vehicle, comprising the apparatus according to any one of claims 13 to 25.

27. A computer-readable storage medium, wherein the computer-readable storage medium stores a computer program, and when the computer program is executed by a computer, the method according to any one of claims 1 to 12 is implemented.

28. A chip, comprising a circuit, wherein the circuit is configured to perform the method according to any one of claims 1 to 12.
